(19) Europäisches Patentamt
European Patent Office
Office européen des brevets

(11) **EP 3 059 554 B1**

(12) **EUROPÄISCHE PATENTSCHRIFT**

(45) Veröffentlichungstag und Bekanntmachung des Hinweises auf die Patenterteilung:
**30.08.2017 Patentblatt 2017/35**

(51) Int Cl.:
***G01D 5/38*** *(2006.01)*

(21) Anmeldenummer: **16154260.0**

(22) Anmeldetag: **04.02.2016**

(54) **OPTISCHE POSITIONSMESSEINRICHTUNG**

OPTICAL POSITIONING DEVICE

DISPOSITIF OPTIQUE DE MESURE DE POSITION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.02.2015 DE 102015203188**

(43) Veröffentlichungstag der Anmeldung:
**24.08.2016 Patentblatt 2016/34**

(73) Patentinhaber: **Dr. Johannes Heidenhain GmbH 83301 Traunreut (DE)**

(72) Erfinder: **HOLZAPFEL, Wolfgang 83119 Obing (DE)**

(56) Entgegenhaltungen:
**EP-A2- 1 762 828 US-A- 6 166 817 US-A1- 2012 050 748**

**Beschreibung**

## GEBIET DER TECHNIK

Die vorliegende Erfindung betrifft eine optische Positionsmesseinrichtung gemäß dem Oberbegriff von Anspruch 1.

## STAND DER TECHNIK

In bekannten Positionsmesseinrichtungen zur Erfassung der Position von zwei zueinander beweglichen Objekten wird üblicherweise die Position einer Abtasteinheit relativ zu einer Maßverkörperung mit einer darauf angeordneten Messteilung entlang der Teilungsrichtung der Maßverkörperung bestimmt, wobei die Teilungsrichtung der Messrichtung entspricht; Abtasteinheit und Maßverkörperung sind hierbei jeweils mit einem der beiden beweglichen Objekte verbunden. Der sogenannte Empfindlichkeitsvektor der Positionsmesseinrichtung, der die jeweilige effektive Messrichtung bezeichnet, ist in bekannten Vorrichtungen üblicherweise parallel zur Oberfläche der Maßverkörperung orientiert.

Desweiteren sind Positionsmesseinrichtungen bekannt, deren Empfindlichkeitsvektor schräg zur Oberfläche einer Maßverkörperung mit einer reflektiven Messteilung orientiert ist. Hierzu sei etwa auf die EP 1 762 828 A2 der Anmelderin verwiesen. Die geneigte Ausrichtung des Empfindlichkeitsvektors wird in einer derartigen Positionsmesseinrichtung durch eine asymmetrische Ausbildung des interferentiellen Abtaststrahlengangs sichergestellt. In entsprechenden Abtaststrahlengängen wird ein einfallendes Strahlenbündel in mindestens zwei Teilstrahlenbündel aufgespalten, die schließlich zur interferierenden Überlagerung gebracht werden. Mit Hilfe derartiger Positionsmesseinrichtungen können Positionsinformationen bezüglich einer Relativbewegung von Abtasteinheit und Maßverkörperung entlang einer lateralen Mess- bzw. Verschiebungsrichtung als auch entlang einer vertikalen Mess- bzw. Verschiebungsrichtung gewonnen werden. Das heißt, mit Hilfe einer derartigen Positionsmesseinrichtung können Positionsänderungen entlang zweier translatorischer Bewegungs-Freiheitsgrade erfasst werden. Die Weglängen der interferierenden Teilstrahlenbündel sind in einer solchen Positionsmesseinrichtung üblicherweise nur in einem Nenn-Abtastabstand zwischen Abtasteinheit und Maßverkörperung gleich lang. Wird die Maßverkörperung oder die Abtasteinheit aus diesem Nenn-Abtastabstand heraus bewegt, so ergeben sich unterschiedliche Weglängen in den zur Interferenz gelangenden Teilstrahlenbündeln. Eine eventuelle Änderung der Wellenlänge der verwendeten Lichtquelle beeinflusst damit die Phase der interferierenden Teilstrahlenbündel und somit auch die ermittelte Positionsinformation, Man bezeichnet die Abtastoptiken derartiger Positionsmesseinrichtungen deshalb als chromatisch. Die darin eingesetzte Lichtquelle muss deswegen eine ausreichende Kahärenzlänge und ein äußerst geringes Phasenrauschen aufweisen. Um dies zu gewährleisten ist eine aufwändige Stabilisierung einer derartigen Lichtquelle nötig, wodurch diese entsprechend teuer ist.

Eine weitere optische Positionsmesseinrichtung, die zur Erfassung von Positionsänderungen entlang zweier translatorischer Bewegungs-Freiheitsgrade geeignet ist und von der bei der Bildung des Oberbegriffs von Anspruch 1 ausgegangen wurde, ist aus der US 2012/0050748 A1 bekannt.

Auch in dieser Positionsmesseinrichtung resultieren die vorgenannten Probleme im Zusammenhang mit der Lichtquelle.

Die US 6,166,817 offenbart eine interferentielle optische Positionsmesseinrichtung, die jedoch nicht zur Erfassung mehrerer translatorischer Bewegungsfreiheitsgrade ausgelegt ist und von daher keine Hinweise zur Lösung der vorstehend diskutierten Problematik enthält.

## ZUSAMMENFASSUNG DER ERFINDUNG

Der vorliegenden Erfindung liegt die Aufgabe zugrunde, eine optische Positionsmesseinrichtung zu schaffen, die einen geneigten Empfindlichkeitsvektor aufweist und bei allen zulässigen Abtastabständen unempfindlich gegenüber Wellenlängenänderungen ist.

Diese Aufgabe wird erfindungsgemäß durch eine optische Positionsmesseinrichtung mit den Merkmalen des Anspruchs 1 gelöst.

Vorteilhafte Ausführungen der erfindungsgemäßen optischen Positionsmesseinrichtung ergeben sich aus den Maßnahmen, die in den abhängigen Ansprüchen aufgeführt sind.

Die erfindungsgemäße optische Positionsmesseinrichtung zur Erfassung der Position von zwei relativ zueinander beweglichen Objekten umfasst

- eine Maßverkörperung, die mit einem der beiden Objekte verbunden ist und eine Messteilung mit einer periodischen Anordnung von Teilungsbereichen entlang mindestens einer ersten Teilungsrichtung aufweist sowie

  - eine Abtasteinheit mit mehreren optischen Elementen, die beweglich relativ zur Maßverkörperung angeordnet ist, wobei über die Anordnung und Ausbildung der optischen Elemente der Abtasteinheit ein Abtaststrahlengang resultiert, in dem zur Interferenz gelangende Teilstrahlenbündel in Bezug auf eine Symmetrieebene spiegelsymmetrisch propagieren und entweder V-förmig auf die Maßverkörperung einfallen und/oder eine V-förmige Rückreflexion von der Maßverkörperung erfahren.

Die Symmetrieebene ist um einen definierten Kippwinkel um eine Drehachse verkippt, welche parallel zur Oberfläche der Maßverkörperung orientiert ist und sich senkrecht zur ersten Teilungsrichtung erstreckt.

Hierbei gelangen dabei Teilstrahlenbündel zur Interferenz, die aus nichtsymmetrischen Beugungsordnungen an der Messteilung resultieren.

Vorzugsweise sind die Teilungsperiode der Messteilung und der Kippwinkel derart gewählt, dass der Abtaststrahlengang in der Abtasteinheit identisch zum Abtaststrahlengang im unverkippten Zustand ist, in dem die Symmetrieebene senkrecht zur Oberfläche der Maßverkörperung orientiert ist.

Hierbei können Teilstrahlenbündel zur Interferenz gelangen, die aus einer der folgenden Kombinationen von Beugungsordnungen an der Messteilung resultieren:

+3. /-1. Beugungsordnung,
+1. 10. Beugungsordnung
-3. / + 1. Beugungsordnung,
-1. /0. Beugungsordnung

Es ist möglich, dass die Messteilung als Reflexions-Phasengitter ausgebildet ist, welches auf eine hohe Beugungseffizienz der zur Signalerzeugung genutzten Beugungsordnungen optimiert ist.

Es kann ferner vorgesehen sein, dass Abtasteinheit mindestens eine Abtastplatte mit mehreren optischen Elementen umfasst, wobei die Abtastplatte senkrecht zur Symmetrieebene angeordnet ist.

In einer möglichen Ausführungsform kann weiterhin vorgesehen werden, dass eine in der Abtasteinheit angeordnete Abtastplatte transparent ausgebildet ist und auf dessen der Maßverkörperung zugewandten Seite zwei erste und zwei zweite Abtastgitter angeordnet sind und zwei Reflektoren auf der hierzu entgegengesetzten Seite der Abtastplatte angeordnet sind, wobei die reflektierenden Seiten der Reflektoren in Richtung der Maßverkörperung orientiert sind.

Hierbei kann die Abtasteinheit dergestalt ausgebildet sein, dass ein von einer Lichtquelle emittiertes Strahlenbündel

- auf die Messteilung auftrifft, wo eine Aufspaltung in zwei V-förmig zur Abtasteinheit rückreflektierte Teilstrahlenbündel erfolgt, die zwei unterschiedlichen Beugungsordnungen entsprechen,
- die beiden rückreflektierten Teilstrahlenbündel in der Abtasteinheit die zwei ersten Abtastgitter in Richtung der zwei Reflektoren durchtreten und hierbei eine antiparallel zur Einfallsrichtung orientierte Ablenkwirkung sowie nur eine fokussierende Wirkung senkrecht zur ersten Teilungsrichtung erfahren,
- die derart abgelenkten und fokussierten Teilstrahlenbündel dann jeweils auf den Reflektor treffen und eine Rückreflexion in Richtung der Maßverkörperung erfahren,
- die beiden rückreflektierten Teilstrahlenbündel dann die zwei zweiten Abtastgitter in Richtung der Maßverkörperung durchtreten und hierbei eine Ablenkwirkung in der ersten Teilungsrichtung sowie nur eine kollimierende Wirkung senkrecht zur ersten Teilungsrichtung erfahren, so dass die beiden Teilstrahlenbündel dann V-förmig in Richtung der Maßverkörperung propagieren,
- wo eine erneute Beugung und Rückreflexion überlagerter Teilstrahlenbündel in Richtung der Abtasteinheit resultiert.

In einer weiteren Ausführungsform ist es möglich, dass die Abtasteinheit mindestens ein Aufspaltelement, zwei Umlenkelemente, zwei Reflektoren sowie zwei Linsen umfasst.

Hierbei kann die Abtasteinheit dergestalt ausgebildet sein, dass ein von einer Lichtquelle emittiertes Strahlenbündel

- über das Aufspaltelement eine Aufspaltung in zwei Teilstrahlenbündel erfährt, die dann jeweils in Richtung der Umlenkelemente propagieren,
- die Teilstrahlenbündel über die Umlenkelemente eine Umlenkung erfahren, so dass sie V-förmig in Richtung eines ersten Auftreffortes auf der Messteilung propagieren,
- die Teilstrahlenbündel am ersten Auftreffort auf der Messteilung jeweils eine erste Beugung und V-förmige Rückreflexion in Richtung der Linsen und Reflektoren in der Abtasteinheit erfahren,
- die Teilstrahlenbündel die Linsen ein erstes Mal durchlaufen, von den Reflektoren in die Einfallsrichtung V-förmig zurückreflektiert werden und die Linsen ein zweites Mal durchlaufen und
- die Teilstrahlenbündel die Messteilung dann an einem zweiten Auftreffort beaufschlagen und jeweils eine zweite Beugung und eine V-förmige Rückreflexion in Richtung der Umlenkelemente in der Abtasteinheit erfahren.

In einer weiteren Ausführungsform ist es möglich, dass die Abtasteinheit mindestens eine transparente Abtastplatte sowie einen strukturierten Fotodetektor umfasst, wobei auf der dem einfallenden Strahlenbündel zugewandten Seite der Abtastplatte erste und zweite Abtastgitter angeordnet sind.

Hierbei kann die Abtasteinheit dergestalt ausgebildet sein, dass ein von einer Lichtquelle emittiertes Strahlenbündel

- die Abtastplatte unbeeinflusst durchläuft und dann auf die Messteilung auftrifft, wo eine Aufspaltung in zwei V-förmig zur Abtasteinheit rückreflektierte Teilstrahlenbündel erfolgt, die zwei unterschiedlichen Beugungsordnungen entsprechen und
- die beiden rückreflektierten Teilstrahlenbündel in der Abtasteinheit jeweils eines der beiden Abtastgitter durchtreten und hierbei eine Ablenkwirkung in Richtung der Symmetrieebene erfahren und dann in Richtung des strukturierten Fotodetektors propagieren, wo sie interferierend zur Überlagerung kommen.

Desweiteren ist es möglich, dass eine zweite, identisch ausgebildete Abtasteinheit mit der Abtasteinheit mechanisch fest verbunden ist, wobei die beiden Abtasteinheiten um den gleichen Winkelbetrag aber in entgegengesetzten Richtungen um zugeordnete, parallel zueinander orientierte Drehachsen verkippt angeordnet sind.

Dabei kann vorgesehen sein, dass die Messteilung als zweidimensionales Kreuzgitter ausgebildet ist, das periodische Anordnungen von Teilungsbereichen entlang der ersten und zweiten Teilungsrichtung umfasst und drei Paare von miteinander mechanisch fest verbundenen Positionsmesseinrichtungen aufweist, wobei zwei Paare parallel zur ersten Teilungsrichtung angeordnet sind und das dritte Paar parallel zur zweiten Teilungsrichtung angeordnet ist.

Die erfindungsgemäße optische Positionsmesseinrichtung weist den wichtigen Vorteil auf, in einem großen Bereich zulässiger Abtastabstände unempfindlich gegenüber Schwankungen der verwendeten Lichtwellenlänge zu sein. Auch bei eventuellen Änderungen der Wellenlänge resultieren stets korrekte Positionswerte. Es können damit deutlich einfachere und günstigere Lichtquellen in der erfindungsgemäßen Positionsmesseinrichtung eingesetzt werden.

Desweiteren ist es möglich, die Abtasteinheit der erfindungsgemäßen Positionsmesseinrichtung auch für eine Abtastung zu verwenden, bei der der Empfindlichkeitsvektor parallel zur Oberfläche der Maßverkörperung orientiert ist; dies sind übliche Anwendungen, in denen z.B. eine Relativverschiebung von Abtasteinheit und Maßverkörperung entlang einer Messrichtung messtechnisch erfasst werden soll. Es ist damit nicht mehr erforderlich, für unterschiedliche Messaufgaben, unterschiedliche Abtasteinheiten zu entwickeln und bereitzuhalten.

Weitere Einzelheiten und Vorteile der vorliegenden Erfindung seien anhand der nachfolgenden Beschreibung von Ausführungsbeispielen der erfindungsgemäßen Vorrichtung in Verbindung mit den Figuren erläutert.

## KURZE BESCHREIBUNG DER ZEICHNUNGEN

Es zeigt

Figur 1a -1c jeweils eine schematisierte Schnittansicht der Abtasteinheit des ersten Ausführungsbeispiels der erfindungsgemäßen optischen Positionsmesseinrichtung, die in einer Positionsmesseinrichtung eingesetzt wird, die einen Empfindlichkeitsvektor parallel zur Oberfläche der abgetasteten Maßverkörperung besitzt;

Figur 2a - 2c jeweils eine schematisierte Schnittansicht eines ersten Ausführungsbeispiels der erfindungsgemäßen optischen Positionsmesseinrichtung mit geneigtem Empfindlichkeitsvektor;

Figur 3a, 3b jeweils eine schematisierte Schnittansicht eines zweiten Ausführungsbeispiels der erfindungsgemäßen optischen Positionsmesseinrichtung mit geneigtem Empfindlichkeitsvektor;

Figur 4a, 4b jeweils eine schematisierte Schnittansicht eines dritten Ausführungsbeispiels der erfindungsgemäßen optischen Positionsmesseinrichtung mit geneigtem Empfindlichkeitsvektor;

Figur 5 eine schematisierte Schnittansicht einer Variante des dritten Ausführungsbeispiels der erfindungsgemäßen optischen Positionsmesseinrichtung;

Figur 6 eine schematisierte Darstellung einer weiteren Variante des dritten Ausführungsbeispiels der erfindungsgemäßen optischen Positionsmesseinrichtung.

**EP 3 059 554 B1**

**BESCHREIBUNG DER AUSFÜHRUNGSFORMEN**

Bevor anhand der Figuren eine Reihe von Ausführungsbeispielen der erfindungsgemäßen optischen Positionsmesseinrichtung im Detail beschrieben wird, seien nachfolgend zunächst einige Begrifflichkeiten im Zusammenhang mit der vorliegenden Erfindung erläutert.

Dazu sei noch einmal auf Abtastoptiken von Positionsmesseinrichtungen verwiesen, bei denen im Messbetrieb der Empfindlichkeitsvektor parallel zur Oberfläche der Maßverkörperung orientiert ist. In derartigen Abtastoptiken wird üblicherweise ein von einer Lichtquelle emittiertes Strahlenbündel in zwei Teilstrahlenbündel aufgespalten. Die beiden Teilstrahlenbündel werden an der Messteilung der Maßverkörperung in unterschiedliche Beugungsordnungen gebeugt und schließlich überlagert und zur Interferenz gebracht. Es lassen sich auf diese Art und Weise zueinander phasenverschobene Abtastsignale erzeugen, aus denen durch Inkrementalzählung und Interpolation Positionswerte gebildet werden. Einige solcher Abtastoptiken erzeugen Teilstrahlenbündel, die von der Aufspaltung bis zur Überlagerung spiegelsymmetrisch in Bezug auf eine Symmetrieebene verlaufen. Die Symmetrieebenen derartiger Abtaststrahlengänge stehen in dieser Betriebsart dabei senkrecht auf der Maßverkörperungsoberfläche und damit auch senkrecht zur Teilungsrichtung der Messteilung der Maßverkörperung. Die Teilungsrichtung entspricht hierbei dem Gittervektor der Messteilung, der immer senkrecht zu den Gitterlinien der Messteilung orientiert ist; nachfolgend werden die Begriffe Teilungsrichtung und Gittervektor daher gleichwertig nebeneinander verwendet. Aufgrund der Spiegelsymmetrie des Abtaststrahlengangs resultieren gleichlange Propagationswege der Teilstrahlenbündel zwischen Aufspaltung und Wiedervereinigung. Die Abtastoptik ist damit achromatisch, d.h. die Wellenlänge der Lichtquelle sowie deren spektrale Verteilung haben keinen Einfluss auf die Phase und den Modulationsgrad der erzeugten Abtastsignale.

Abtastoptiken, in denen die zur Interferenz gelangenden Teilstrahlenbündel spiegelsymmetrisch in Bezug auf eine Symmetrieebene propagieren, können darüber hinaus auch so ausgebildet werden, dass der sogenannte neutrale Drehpunkt der Abtastung auf der Maßverkörperung liegt. Als neutraler Drehpunkt wird hierbei derjenige Punkt im Raum bezeichnet, um den entweder die Abtasteinheit oder die Maßverkörperung gekippt werden kann, ohne dass sich der angezeigte Positionswert ändert. Die zurückgelegten Propagationswege der beiden Teilstrahlenbündel zwischen Aufspaltung und Wiedervereinigung bleiben bei einer Kippung um den neutralen Drehpunkt gleich. Derartige Abtastoptiken mit spiegelsymmetrischen Teilstrahlengängen und neutralem Drehpunkt auf der Maßverkörperung werden im Folgenden auch als symmetrisch-V-förmige Abtastoptiken bezeichnet. Diese Bezeichnung umschreibt somit all diejenigen Abtastoptiken, deren zur Interferenz gelangenden zwei Teilstrahlenbündel zum einen spiegelsymmetrisch in Bezug auf eine Symmetrieebene propagieren und zum anderen auf einen gemeinsamen Abtastort auf der Maßverkörperung V-förmig einfallen und/oder von ihm eine V-förmige Rückreflexion von der Maßverkörperung erfahren. Dabei müssen nur die Auftrefforte beider Teilstrahlenbündel auf der Maßverkörperung entlang der Teilungsrichtung bzw. entlang des Gittervektors nahezu identisch sein, ein Versatz senkrecht zum Gittervektor bzw. entlang der Längsrichtung der strichförmigen Teilungsbereiche ist unerheblich.

Neben derartigen Abtastoptiken mit gleichen oder nahezu gleichen Auftrefforten der beiden Teilstrahlenbündel auf der Maßverkörperung entlang des Gittervektors gibt es weitere symmetrische Abtastoptiken, deren neutraler Drehpunkt auf der Maßverkörperung liegt. In der Europäischen Patentanmeldung EP 14182781.6 der Anmelderin findet sich eine allgemeine Beschreibung des Zusammenhangs zwischen einem beliebigen Strahlengang einer Abtastoptik und der zugehörigen Lage des neutralen Drehpunkts. Auf Grundlage dieser Beschreibung können weitere Abtastoptiken mit symmetrischem Strahlengang angegeben werden, deren neutraler Drehpunkt auf der Maßverkörperung liegt. Alle diese Abtastoptiken werden nachfolgend auch als symmetrisch-V-förmige Abtastoptiken bezeichnet.

Im Betrieb einer solchen symmetrisch-V-förmigen Abtastoptik mit parallelem Empfindlichkeitsvektor zur Maßverkörperungsoberfläche wird die Abtasteinheit so zur Maßverkörperung mit der Teilungsperiode $d_M$ ausgerichtet, dass die oben erwähnte Symmetrieebene senkrecht zur Maßverkörperungsoberfläche und auch senkrecht zum Gittervektor der Messteilung der Maßverkörperung steht. Dies wird als parallele Ausrichtung von Abtasteinheit und Maßverkörperung bezeichnet.

Die Grundidee der vorliegenden Erfindung besteht nunmehr darin, eine solche symmetrisch-V-förmige Abtastoptik bzw. die zugehörige Symmetrieebene um einen bestimmten Kippwinkel $\alpha$ um eine Drehachse zu verkippen, die parallel zur Oberfläche der Maßverkörperung orientiert ist und sich senkrecht zum Gittervektor der Messteilung der Maßverkörperung erstreckt, d.h. parallel zur Längserstreckungsrichtung der Teilungsbereiche der Messteilung. Durch geeignete weitere Maßnahmen wird sichergestellt, dass der Abtaststrahlengang in Bezug auf die Abtasteinheit identisch zum Abtaststrahlengang im unverkippten Zustand ist. Die zusätzlichen Maßnahmen umfassen neben der Wahl eines geeigneten Kippwinkels $\alpha$ die Wahl einer passenden Teilungsperiode der Messteilung sowie eine Wahl geeigneter, zur Interferenz gelangender Teilstrahlenbündel, die aus nichtsymmetrischen Beugungsordnungen an der Messteilung resultieren.

Eine detaillierte Beschreibung dieser Grundidee erfolgt nachfolgend anhand des ersten Ausführungsbeispiels der erfindungsgemäßen optischen Positionsmesseinrichtung.

Erstes Ausführungsbeispiel

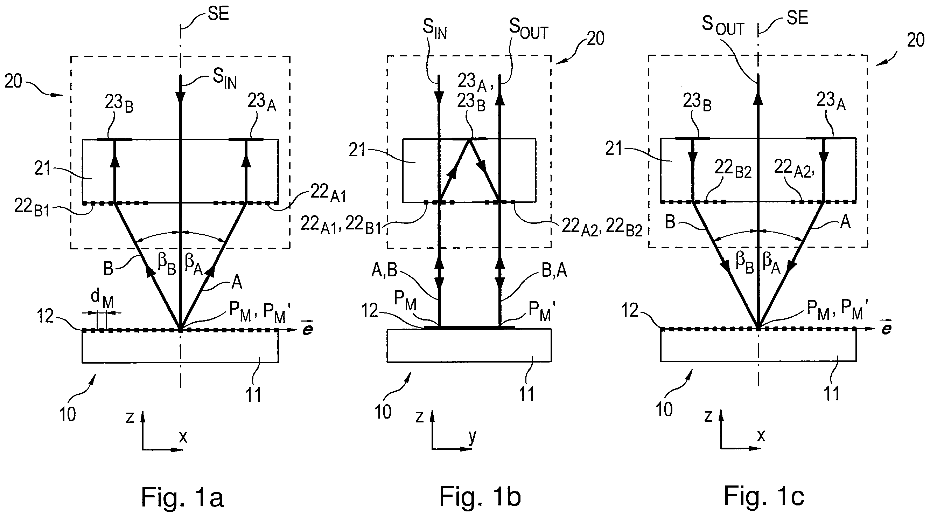

In den Figuren 1a, 1b und 1c ist der Abtaststrahlengang einer bekannten optischen Positionsmesseinrichtung mit symmetrisch-V-förmiger Abtastoptik in verschiedenen Ansichten gezeigt. Der Empfindlichkeitsvektor e dieser Abtastoptik ist hier parallel zur Maßverkörperungsoberfläche und parallel zum Gittervektor der Messteilung bzw. einer ersten Teilungsrichtung x orientiert; nachfolgend sei im Zusammenhang mit einer derartigen Orientierung des Empfindlichkeitsvektors e auch von einem sogenannten in-plane-Betrieb der entsprechenden Positionsmesseinrichtung die Rede. In Figur 1a ist eine Ansicht des Strahlverlaufs in der xz-Ebene vom von einer - nicht gezeigten - Lichtquelle her einfallenden Strahlenbündel $S_{IN}$ bis zu den Reflektoren $23_A$, $23_B$ dargestellt, in Figur 1c der Strahlverlauf in der gleichen Ebene von den Reflektoren $23_A$, $23_B$ bis zum austretenden Signalstrahlenbündel $S_{OUT}$ mit den überlagerten Teilstrahlenbündeln, die in Richtung einer - ebenfalls nicht dargestellten - Detektoreinheit propagieren; Figur 1b zeigt den vollständigen Abtaststrahlengang in der yz-Ebene.

Die in diesen Figuren dargestellte optische Positionsmesseinrichtung umfasst eine Maßverkörperung 10, die sich entlang der ersten Teilungsrichtung x erstreckt, sowie eine Abtasteinheit 20, die mindestens entlang der ersten Teilungsrichtung x relativ beweglich zur Maßverkörperung 10 angeordnet ist. Die Maßverkörperung 10 und die Abtasteinheit 20 sind jeweils mit nicht in den Figuren dargestellten Objekten verbunden, beispielsweise mit relativ zueinander beweglichen Maschinenkomponenten. Mit Hilfe der über die Positionsmesseinrichtung erzeugten Abtastsignale kann eine nachgeordnete Maschinensteuerung die räumliche Positionierung dieser Maschinenkomponenten steuern.

Die Maßverkörperung 10 besteht aus einem Teilungsträger 11, auf dessen Oberfläche eine Messteilung 12 angeordnet ist, die eine periodische Anordnung von strichförmigen Teilungsbereichen entlang eines ersten Gittervektors bzw. entlang einer ersten Teilungsrichtung x umfasst; die Längserstreckungsrichtung der Teilungsbereiche entspricht in den Figuren der y-Richtung. Die Messteilung 12 ist im vorliegenden Ausführungsbeispiel als Reflexions-Phasengitter mit der Teilungsperiode $d_M$ sowie einem Phasenhub von 180° ausgebildet und sieht eine periodische Anordnung von Teilungsbereichen mit unterschiedlichen phasenschiebenden Wirkungen für das darauf einfallende Licht vor.

Auf Seiten der Abtasteinheit 20 ist in den Figuren von den verschiedenen darin angeordneten optischen Elementen i.w. nur eine transparente Abtastplatte 21 sowie die auf deren Oberseite angeordneten Reflektoren $23_A$, $23_B$ bzw. die auf deren Unterseite angeordneten Abtastgitter $22_{A1}$, $22_{A2}$, $22_{B1}$, $22_{B2}$ dargestellt. Nicht gezeigt sind hingegen die Lichtquelle sowie die Detektoreinheit, die grundsätzlich ebenfalls in der Abtasteinheit 20 angeordnet sein können. Es ist alternativ aber auch möglich, diese Elemente räumlich entfernt von der Abtasteinheit 20 zu platzieren und mittels Lichtwellenleitern mit der Abtasteinheit 20 zu verbinden, über die das einfallende Strahlenbündel $S_{IN}$ bzw. das austretende Signalstrahlenbündel $S_{OUT}$ dann jeweils übertragen werden.

Wie nachfolgend anhand der Detail-Beschreibungen der verschiedenen Abtaststrahlengänge ersichtlich wird, ist über die Anordnung und Ausbildung der verschiedenen optischen Elemente in der Abtasteinheit 20 jeweils gewährleistet, dass ein Abtaststrahlengang resultiert, in dem zur Interferenz gelangende Teilstrahlenbündel A, B in Bezug auf eine Symmetrieebene SE spiegelsymmetrisch propagieren. Dabei fallen diese entweder V-förmig auf die Maßverkörperung 10 ein und/oder erfahren eine V-förmige Rückreflexion von der Maßverkörperung 10.

Das von der - nicht gezeigten - Lichtquelle her einfallende Strahlenbündel $S_{IN}$ trifft nach dem Durchlaufen der transparenten Abtastplatte 21 am ersten Auftreffort $P_M$ senkrecht auf die Messteilung 12 der Maßverkörperung 10. Dort resultiert eine Aufspaltung in zwei V-förmig zur Abtasteinheit 20 zurückreflektierte Teilstrahlenbündel A, B. Das einfallende Strahlenbündel $S_{IN}$ wird dabei in die symmetrischen Beugungsordnungen $n_{A1}$ = +1 und $n_{B1}$ = -1 und damit in die beiden Teilstrahlenbündel A, B aufgespalten, die identische Beugungs- bzw. Ablenkwinkel $\beta_A$ = $\beta_B$ gegenüber der Einfallsrichtung des einfallenden Strahlenbündels $S_{IN}$ aufweisen. Hierbei gilt:

$$\sin(\beta_A) = \sin(\beta_B) = \frac{\lambda}{d_M} \qquad \text{(Gl. 1)}$$

mit:

$\beta_A$ := Ablenkwinkel des Teilstrahlenbündels A gegenüber der Einfallsrichtung des einfallenden Strahlenbündels
$\beta_B$ := Ablenkwinkel des Teilstrahlenbündels B gegenüber der Einfallsrichtung des einfallenden Strahlenbündels
$\lambda$ := Lichtwellenlänge
$d_M$ := Teilungsperiode der Messteilung

Die aufgespaltenen Teilstrahlenbündel A und B propagieren dann jeweils zu ersten Abtastgittern $22_{A1}$ bzw. $22_{B1}$ auf der Unterseite der transparenten Abtastplatte 21 und durchtreten diese. Die beiden ersten Abtastgitter $22_{A1}$ bzw. $22_{B1}$ vereinen dabei mehrere optische Funktionen in einer gemeinsamen, diffraktiven Struktur. So werden die Teilstrahlenbündel A, B in der xz-Projektion (Fig. 1a) jeweils wieder durch eine antiparallel zur Einfallsrichtung orientierte Ablenkwirkung wieder parallel zur optischen Achse in z-Richtung gelenkt. In der yz-Projektion (Fig. 1b) werden die Teilstrahlenbündel A, B durch eine Zylinderlinsenfunktion auf die Reflektoren $23_A$, $23_B$ auf der Oberseite der Abtastplatte 21 fokussiert, wobei lediglich senkrecht zur Richtung x des Gittervektors der Messteilung bzw. entlang deren Teilungsrichtung x eine fokussierende Wirkung resultiert. Die derart abgelenkten und fokussierten Teilstrahlenbündel A, B treffen dann jeweils auf einen Reflektor $23_A$, $23_B$ und erfahren dort eine Rückreflexion in Richtung der Maßverkörperung 10. Nach der Reflexion an den Reflektoren $23_A$, $23_B$ durchtreten die beiden Teilstrahlenbündel A, B die beiden zweiten Abtastgitter $22_{A2}$, $22_{B2}$, welche ebenfalls auf der Unterseite der Abtastplatte 21 angeordnet sind. Die beiden zweiten Abtastgitter $22_{A2}$, $22_{B2}$ vereinen äquivalente Funktionen wie die beiden ersten Abtastgitter $22_{A1}$, $22_{B1}$. So rekollimieren sie die Teilstrahlenbündel A, B wieder durch eine Zylinderlinsenfunktion in der yz-Projektion (Fig. 1b) und lenken sie in der xz-Projektion (Fig. 1c) wieder zurück auf einen gemeinsamen Auftreffort $P_M$' auf der Maßverkörperung 10 bzw. der Messteilung 12. Die beiden Teilstrahlenbündel A, B propagieren dabei V-förmig in Richtung der Maßverkörperung 10 bzw. in Richtung eines zweiten Auftrefforts $P_M$'. Dort werden sie durch erneute Beugung in symmetrischen Beugungsordnungen $n_{A2}$ = +1 und $n_{B2}$ = -1 überlagert und zur Interferenz gebracht und propagieren im Signalstrahlenbündel $S_{OUT}$ in Richtung der Abtasteinheit 20 und einer - nicht dargestellten - Detektoreinheit, wo mehrere periodische, phasenverschobene Abtastsignale aus dem Signalstrahlenbündel $S_{OUT}$ gewonnen werden.

Wie aus den Figuren 1a, 1b ersichtlich, verlaufen beide Teilstrahlenbündel A, B zwischen Aufspaltung und Wiedervereinigung spiegelsymmetrisch zu einer Symmetrieebene SE, die hier identisch mit der yz-Ebene aus Figur 1 b ist, und werden jeweils an den selben Auftrefforten $P_M$ bzw. $P_M$' von der Messteilung 12 gebeugt. Damit liegt der neutrale Drehpunkt dieser Abtastoptik auf der Maßverkörperung 10, d.h. die Abtastoptik ist symmetrisch-V-förmig. Die zur Interferenz gelangenden Teilstrahlenbündel A, B propagieren in Bezug auf die Symmetrieebene SE spiegelsymmetrisch, erfahren zunächst eine V-förmige Rückreflexion von der Maßverkörperung 10 und fallen dann V-förmig auf die Maßverkörperung 10 ein.

Die Signalperiode SP der mit dieser Positionsmesseinrichtung erzeugten periodischen Abtastsignale beträgt im dargestellten in-plane-Betrieb SP = $d_M$/4. Der Empfindlichkeitsvektor e ist parallel zum in Richtung x verlaufenden Gittervektor der Messteilung 12 orientiert.

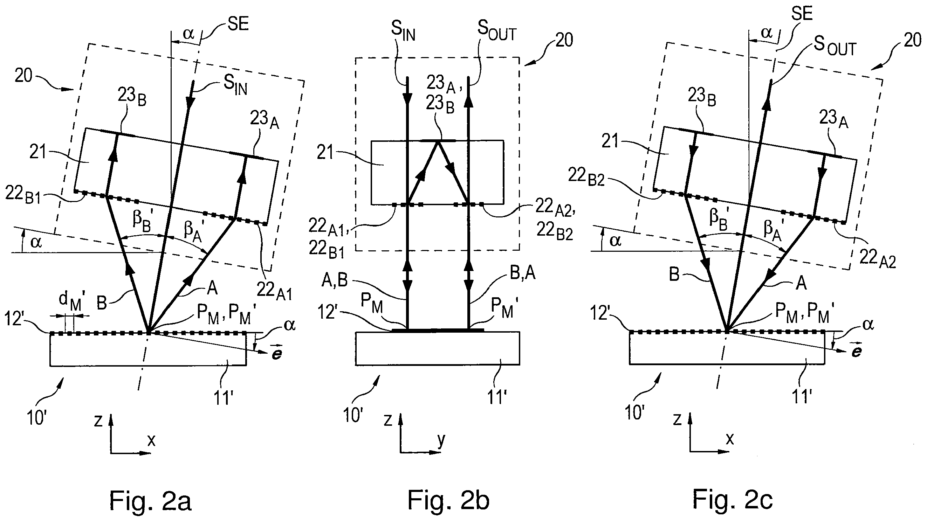

In den Figuren 2a, 2b und 2c ist nunmehr ein erstes Ausführungsbeispiel der erfindungsgemäßen optischen Positionsmesseinrichtung gezeigt, die in einem sogenannten out-of-plane-Betrieb arbeitet und wie aus den Figuren 2a, 2c ersichtlich einen gegenüber der Maßverkörperungsoberfläche geneigten Empfindlichkeitsvektor e aufweist. Es lassen sich damit also positionsabhängige Abtastsignale sowohl für die Relativbewegung von Abtasteinheit und Maßverkörperung entlang der ersten Teilungsrichtung x bzw. entlang des in x-Richtung orientierten Gittervektors der Messteilung 12 als auch entlang der hierzu senkrechten Richtung z erzeugen. Die erfindungsgemäße Positionsmesseinrichtung nutzt hierbei die gleiche Abtastoptik, d.h. die gleiche Abtasteinheit 20, wie die bekannte Positionsmesseinrichtung aus den Figuren 1a - 1c. Im Unterschied dazu ist hier jedoch die Abtasteinheit 20 bzw. die Symmetrieebene SE - wie aus den Figuren 2a und 2c ersichtlich - um einen Kippwinkel α um eine Drehachse in y-Richtung verkippt angeordnet; entsprechend verkippt und damit senkrecht zur Symmetrieebene SE ist dann auch die in der Abtasteinheit 20 vorgesehene Abtastplatte 21 angeordnet. Die entsprechende Drehachse ist parallel zur Oberfläche der Maßverkörperung 10' orientiert und erstreckt sich senkrecht zum in x-Richtung orientierten Gittervektor der Messteilung 12. Zudem ist die Teilungsperiode $d_M$' der Messteilung 12' der erfindungsgemäßen Positionsmesseinrichtung mit $d_M$' ≠ $d_M$ unterschiedlich zur Teilungsperiode $d_M$ der Messteilung 12 der vorstehend erläuterten Positionsmesseinrichtung aus den Figuren 1a - 1c gewählt. Desweiteren werden auch andere resultierende Beugungsordnungen der Messteilung 12' zur Aufspaltung und Überlagerung der beiden Teilstrahlenbündel A, B verwendet als im Fall der konventionellen Positionsmesseinrichtung gemäß den Figuren 1a - 1 c. Der Verlauf des Abtaststrahlengangs entspricht bezüglich des Durchlaufens und Beaufschlagens der verschiedenen optischen Elemente dem beschriebenen Abtaststrahlengang der Positionsmesseinrichtung aus den Figuren 1a- 1 c.

Die neben dem Kippwinkel α darüber hinaus vorgesehenen Unterschiede zwischen der erfindungsgemäßen Positionsmesseinrichtung und der bekannten Vorrichtung aus den Figuren 1a - 1c werden nachfolgend im Detail erläutert.

So wird im dargestellten ersten Ausführungsbeispiel der erfindungsgemäßen Positionsmesseinrichtung das Teilstrahlenbündel A zweimal in +3. Beugungsordnung an der Messteilung 12' gebeugt ($n_{A1}$ = $n_{A2}$ = +3), während das Teilstrahlenbündel B zweimal in -1. Beugungsordnung abgelenkt wird ($n_{B1}$ = $n_{B2}$ = -1). Der Kippwinkel α und die Teilungsperiode $d_M$' der Messteilung 12' sind nun derart gewählt, dass der Strahlengang der Abtastoptik abgesehen von der Verkippung der Symmetrieebene SE um den Kippwinkel α identisch zum Strahlengang des vorstehend erläuterten in-plane-Betriebs bleibt. Das bedeutet, dass die Beugungs- bzw. Ablenkwinkel $β_A$' und $β_B$' bei der Beugung an der Messteilung 12' der erfindungsgemäßen Positionsmesseinrichtung identisch zu den Ablenkwinkeln $β_A$ = $β_B$ der Positionsmesseinrichtung im in-plane-Betrieb aus den Figuren 1a - 1c sein müssen:

$$\beta_A' = \beta_B' = \beta_A = \beta_B \quad \text{(Gl. 2)}$$

mit:

$\beta'_A :=$      Ablenkwinkel des Teilstrahlenbündels A gegenüber der Einfallsrichtung des einfallenden Strahlenbündels im out-of-plane-Betrieb

$\beta'_B :=$      Ablenkwinkel des Teilstrahlenbündels B gegenüber der Einfallsrichtung des einfallenden Strahlenbündels im out-of-plane-Betrieb

$\beta_A :=$      Ablenkwinkel des Teilstrahlenbündels A gegenüber der Einfallsrichtung des einfallenden Strahlenbündels im in-plane-Betrieb

$\beta_B :=$      Ablenkwinkel des Teilstrahlenbündels B gegenüber der Einfallsrichtung des einfallenden Strahlenbündels im in-plane-Betrieb

Unter Berücksichtigung des Kippwinkels $\alpha$ ergeben sich folgende Ablenkwinkel $\beta_A'$ bzw. $\beta_B'$ für die Beugung an der Messteilung 12' mit der Teilungsperiode $d_M'$ in den Beugungsordnungen $n_{A1}$ bzw. $n_{B1}$:

$$-\sin(\alpha) + n_{A1} \cdot \frac{\lambda}{d_M'} = \sin(\beta_A' + \alpha) \qquad \text{(Gl. 3a)}$$

$$-\sin(\alpha) + n_{B1} \cdot \frac{\lambda}{d_M'} = \sin(-\beta_B' + \alpha) \qquad \text{(Gl. 3b)}$$

mit:

$\alpha :=$      Kippwinkel

$n_{A1} :=$      Beugungsordnung des Teilstrahlenbündels A bei erster Beugung an der Messteilung

$n_{B1} :=$      Beugungsordnung des Teilstrahlenbündels B bei erster Beugung an der Messteilung

$\lambda :=$      Lichtwellenlänge

$d_M' :=$      Teilungsperiode der Messteilung für den out-of-plane-Betrieb

$\beta_A' :=$      Ablenkwinkel des Teilstrahlenbündels A gegenüber der Einfallsrichtung des einfallenden Strahlenbündels im out-of-plane-Betrieb

$\beta_B' :=$      Ablenkwinkel des Teilstrahlenbündels B gegenüber der Einfallsrichtung des einfallenden Strahlenbündels im out-of-plane-Betrieb

Aus den Gleichungen 1, 2, 3a und 3b ergeben sich schließlich folgende Bedingungen 4a, 4b für die erfindungsgemäße Positionsmesseinrichtung:

$$-\sin(\alpha) + n_{A1} \cdot \frac{\lambda}{d_M'} = \frac{\lambda}{d_M} \cdot \cos(\alpha) + \sqrt{1 - \left(\frac{\lambda}{d_M}\right)^2} \cdot \sin(\alpha) \qquad \text{(Gl. 4a)}$$

$$-\sin(\alpha) + n_{B1} \cdot \frac{\lambda}{d_M'} = -\frac{\lambda}{d_M} \cdot \cos(\alpha) + \sqrt{1 - \left(\frac{\lambda}{d_M}\right)^2} \cdot \sin(\alpha) \qquad \text{(Gl. 4b)}$$

mit:

$\alpha :=$      Kippwinkel

$n_{A1} :=$      Beugungsordnung des Teilstrahlenbündels A bei erster Beugung an der Messteilung

$n_{B1} :=$      Beugungsordnung des Teilstrahlenbündels B bei erster Beugung an der Messteilung

$\lambda :=$      Lichtwellenlänge

$d_M' :=$      Teilungsperiode der Messteilung für den out-of-plane-Betrieb

$d_M :=$      Teilungsperiode der Messteilung für den in-plane-Betrieb

Die Gleichungen 4a, 4b können nach dem Kippwinkel $\alpha$ und der Teilungsperiode $d_M'$ der Messteilung aufgelöst werden:

$$d'_M = \frac{1}{2}\sqrt{(n_{A1} - n_{B1})^2 \cdot d_M{}^2 + (n_{A1} + n_{B1})^2 \cdot \frac{\lambda^2}{1 + \sqrt{1 - (\frac{\lambda}{d_M})^2}}} \qquad \text{(Gl. 5a)}$$

$$\alpha = \arctan\left(\frac{n_{A1} + n_{B1}}{n_{A1} - n_{B1}} \cdot \frac{\frac{\lambda}{d_M}}{1 + \sqrt{1 - \left(\frac{\lambda}{d_M}\right)^2}}\right) \qquad \text{(Gl. 5b)}$$

mit:

$d'_M :=$    Teilungsperiode der Messteilung für den out-of-plane-Betrieb
$\alpha :=$    Kippwinkel
$n_{A1} :=$    Beugungsordnung des Teilstrahlenbündels A bei erster Beugung an der Messteilung
$n_{B1} :=$    Beugungsordnung des Teilstrahlenbündels B bei erster Beugung an der Messteilung
$\lambda :=$    Lichtwellenlänge
$d_M :=$    Teilungsperiode der Messteilung für den in-plane-Betrieb

Die Gleichungen 5a, 5b liefern für jedes asymmetrische Paar $n_{A1}$, $n_{B1}$ ($n_A \neq -n_B$) von Beugungsordnungen einen zugehörigen Kippwinkel $\alpha \neq 0$ und eine Teilungsperiode $d_M$' $\neq d_M$, über die gewährleistet ist, dass der Abtaststrahlengang symmetrisch in Bezug auf die Symmetrieebene SE verläuft. Die Symmetrieebene SE bleibt relativ zur Abtasteinheit 20 unverändert und ist relativ zur Maßverkörperung 10' erfindungsgemäß um den Kippwinkel $\alpha$ um eine Drehachse parallel zur Maßverkörperung 10' und senkrecht zur Richtung x des Gittervektors bzw. der ersten Teilungsrichtung verkippt angeordnet. Die Weglängen der beiden Teilstrahlenbündel A, B bleiben damit gleich lang und die Abtastoptik ist - wie gefordert - auch im out-of-plane-Betrieb mit geneigtem Empfindlichkeitsvektor e achromatisch. Das bedeutet, dass dieselbe achromatische Abtastoptik bzw. Abtasteinheit 20 sowohl im bekannten in-plane-Betrieb als auch im erfindungsgemäßen out-of-plane-Betrieb verwendet werden kann. Damit ist eine doppelte Nutzung der entsprechenden Abtasteinheit 20 möglich, die aufwändige Entwicklung einer eigens für den out-of-plane-Betrieb optimierten Abtastoptik ist nicht mehr erforderlich. Dies vereinfacht beispielsweise für einen Maschinenhersteller, der beide Betriebsarten nutzen will, die Logistik erheblich.

Wie zu erwarten, liefern die Gleichungen 5a, 5b für symmetrische Beugungsordnungen $n_A = -n_B$ die triviale Lösung $\alpha = 0$ und $d_M$' $= d_M$ des in-plane-Betriebs der bekannten Vorrichtung aus den Figuren 1a - 1c.

Natürlich können bei der resultierenden Beugung an der Messteilung 12' auch andere Kombinationen von Beugungsordnungen für den out-of-plane-Betrieb verwendet werden, solange die Kombinationen entsprechend der Bedingung $n_{A1} = n_{A2} \neq -n_{B1} = -n_{B2}$ nicht-symmetrisch sind. Neben der oben beschriebenen Kombination mit $n_{A1} = n_{A2}$ = +3 und $n_{B1} = n_{B2}$ = -1 ist auch die Kombination nicht-symmetrischer Beugungsordnungen mit $n_{A1} = n_{A2}$ = +1 und $n_{B1}$ = $n_{B2}$ = 0 besonders günstig. Grundsätzlich sind aber auch andere, nicht-symmetrische Kombinationen von Beugungsordnungen einsetzbar, z.B. die Kombinationen $n_{A1} = n_{A2}$ = -3 und $n_{B1} = n_{B2}$ = +1 oder $n_{A1} = n_{A2}$ = +1 und $n_{B1} = n_{B2}$ = 0 etc.. Die Messteilung 12' sollte für den out-of-plane-Betrieb vorzugsweise auf eine hohe Beugungseffizienz der zur Signalerzeugung verwendeten Beugungsordnungen optimiert werden.

Der Empfindlichkeitsvektor $\vec{e}$ ist im out-of-plane-Betrieb um den Kippwinkel $\alpha$ zur Maßverkörperungsoberfläche und zum in x-Richtung verlaufenden Gittervektor der Messteilung 12' geneigt und hat dieselbe Länge wie im in-plane-Betrieb. Das bedeutet dass die Signalperiode $SP_x$' der erzeugten Abtastsignale für eine Maßverkörperungsverschiebung entlang der x-Richtung und die Signalperiode $SP_z$' der erzeugten Abtastsignale für eine Maßverkörperungsverschiebung in z-Richtung durch folgende Beziehungen gegeben sind:

$$SP'_x = \frac{SP}{\cos(\alpha)} \qquad \text{(Gl. 6a)}$$

$$SP'_z = \frac{SP}{\sin(\alpha)} \qquad \text{(Gl. 6b)}$$

mit:

SP$_X$' := Signalperiode der erzeugten Abtastsignale für eine Maßverkörperungsverschiebung entlang der x-Richtung

SP$_Z$' := Signalperiode SP$_Z$' der erzeugten Abtastsignale für eine Maßverkörperungsverschiebung in z-Richtung

SP := Signalperiode der gleichen Abtastoptik im in-plane-Betrieb

$\alpha$ := Kippwinkel

In der nachfolgenden Tabelle 1 sind beispielhafte Werte eines ersten Ausführungsbeispiels der erfindungsgemäßen optischen Positionsmesseinrichtung mit einer Lichtwellenlänge $\lambda$ = 780nm und einer Teilungsperiode d$_M$= 2$\mu$m (in-plane-Betrieb) zusammengefasst:

Tabelle 1

| Betriebsart | n$_{A1}$ = n$_{A2}$ | n$_{B1}$ = n$_{B2}$ | $\alpha$ | d$_M$' | SP$_X$' | SP$_Z$' |
|---|---|---|---|---|---|---|
| in-plane | +1 | -1 | 0° | - | (SP = 0.5 $\mu$m) | - |
| out-of-plane | +3 | -1 | 5.3729° | 4.0365 $\mu$m | 0.5022 $\mu$m | 5.3398 $\mu$m |
| out-of-plane | +1 | 0 | 10.6529° | 1.0360 $\mu$m | 0.5088 $\mu$m | 2.7048 $\mu$m |

Zweites Ausführungsbeispiel

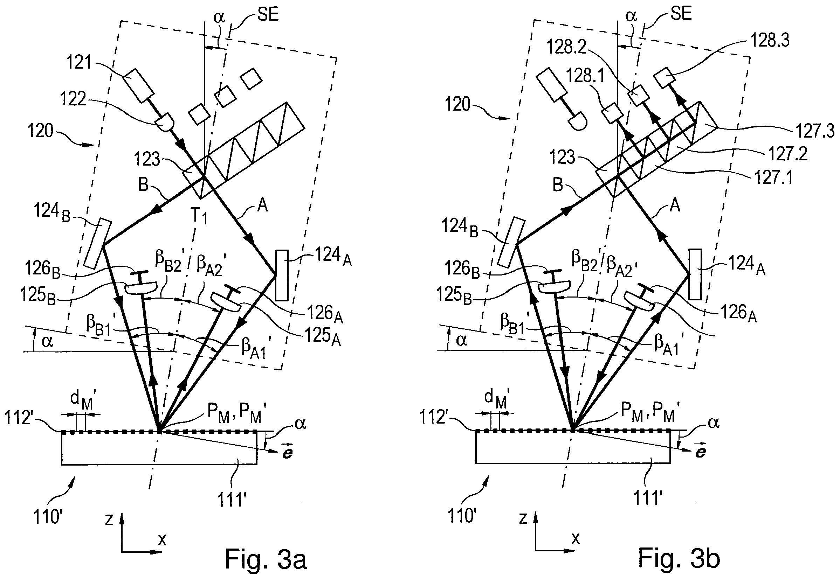

In den Figuren 3a und 3b ist die Abtastoptik eines zweiten Ausführungsbeispiels der erfindungsgemäßen optischen Positionsmesseinrichtung im out-of-plane-Betrieb dargestellt, d.h. im Betrieb mit geneigtem Empfindlichkeitsvektor e. Analog zur Darstellung des ersten Ausführungsbeispiels ist in Figur 3a der Strahlverlauf von der Lichtquelle 121 bis zu den Reflektoren 126$_A$, 126$_B$ in der xz-Ebene gezeigt, in Figur 3b der Strahlverlauf in der xz-Ebene von den Reflektoren 126$_A$, 126$_B$ zu den Detektoren 128.1 - 128.3 einer Detektoreinheit.

Wiederum ist die gesamte Abtastoptik bzw. die Abtasteinheit 120 und damit die Symmetrieebene SE um einen Kippwinkel $\alpha$ um eine Drehachse verkippt. Die Drehachse ist wie im vorhergehenden Ausführungsbeispiel orientiert, nämlich parallel zur Maßverkörperung 110'und senkrecht zum in x-Richtung verlaufenden Gittervektor der Messteilung 112'. Die Drehachse steht damit in den Figuren 3a, 3b senkrecht zur Zeichenebene. Als Messteilung 112' ist ebenfalls wieder ein Reflexions-Phasengitter mit 180° Phasenhub vorgesehen.

Das von der Lichtquelle 121, z.B. einer Laserdiode, emittierte Strahlenbündel wird mit Hilfe einer Kollimationsoptik 122 kollimiert und über einen Strahlteiler 123 in zwei Teilstrahlenbündel A, B aufgespalten. Nach einer Umlenkung durch die Umlenkelemente 124$_A$, 124$_B$ propagieren die beiden Teilstrahlenbündel A, B V-Förmig in Richtung eines gemeinsamen Auftrefforts P$_M$ auf der Messteilung 112' der Maßverkörperung 110'. Dort werden sie in +3. Ordnung (Teilstrahlenbündel A; n$_{A1}$ = +3) und -1. Ordnung (Teilstrahlenbündel B; n$_{B1}$ = -1) in Reflexion gebeugt und erfahren eine V-förmige Rückreflexion in Richtung der Abtasteinheit 120. In der Abtasteinheit 120 durchlaufen die Teilstrahlenbündel A, B dann ein erstes Mal die Linsen 125$_A$, 125$_B$ und treffen anschließend auf die Reflektoren 126$_A$, 126$_B$, die in den Brennebenen der Linsen 125$_A$, 125$_B$ angeordnet sind. Von den Reflektoren 126$_A$, 126$_B$ werden die Teilstrahlenbündel in die Einfallsrichtung V-förmig zurückreflektiert und durchlaufen dann ein zweites Mal die Linsen 125$_A$, 125$_B$. Über die Kombination der Linsen 125$_A$, 125$_B$ mit den Reflektoren 126$_A$, 126$_B$ erfolgt somit eine Retroreflexion der Teilstrahlenbündel A, B antiparallel zurück zu einem gemeinsamen Auftreffort P$_M$' auf der Messteilung 112'. Dort werden die Teilstrahlenbündel A, B erneut in die +3. Ordnung (Teilstrahlenbündel A; n$_{A2}$ = +3) bzw. in die -1. Ordnung (Teilstrahlenbündel B; n$_{B2}$ = -1) gebeugt und propagieren dann über die Umlenkelemente 124$_A$, 124$_B$ zurück zum Strahlteiler 123, der beide Teilstrahlenbündel A, B zu einem Signalstrahlenbündel überlagert. Weitere drei Strahlteiler 127.1, 127.2, 127.3 lenken das Signalstrahlenbündel mit den überlagerten Teilstrahlenbündeln anschließend jeweils auf die Detektoren 128.1, 128.2, 128.3 einer Detektoreinheit, die mehrere periodische, phasenverschobene Abtastsignale erzeugen.

Die notwendige Phasenverschiebung von z.B. 120° zwischen den Abtastsignalen wird durch zusätzliche polarisationsoptische Bauteile erreicht, die in den Figuren 3a und 3b nicht dargestellt sind. Hierzu werden die beiden Teilstrahlenbündel A, B vor deren Überlagerung im Strahlteiler 123 zueinander orthogonal polarisiert. Beispielsweise können dazu jeweils $\lambda$/4-Plättchen in den Strahlengang der Teilstrahlenbündel A, B eingefügt sein, die sie jeweils zweimal durchlaufen. Unmittelbar vor den Detektoren 128.1, 128.2, 128.3 sind ferner Polarisatoren angebracht, deren Orientierung die Phasenlage der zugehörigen Abtastsignale bestimmt, so dass sich darüber die gewünschte Phasenlage einstellen lässt.

Analog zum vorhergehenden Ausführungsbeispiel der erfindungsgemäßen Positionsmesseinrichtung wird auch im vorliegenden zweiten Ausführungsbeispiel der Kippwinkel $\alpha$ der Abtasteinheit 120 bzw. der Symmetrieebene SE und die Teilungsperiode d$_M$' der Messteilung 112' auf der Maßverkörperung 110' definiert gewählt. Dies erfolgt so, dass im out-of-plane-Betrieb derselbe Strahlengang relativ zur verkippten Abtasteinheit 120 wie im Fall des in-plane-Betriebs einer derartigen Abtasteinheit 120 resultiert, wenn die Symmetrieebene SE senkrecht zur Oberfläche der Maßverkörperung 110' orientiert ist.

Hierbei gilt nachfolgende Beziehung im Fall des in-plane-Betriebs einer Abtasteinheit 120 gemäß dem zweiten Ausführungsbeispiel für die Ablenkwinkel $\beta_{A1} = \beta_{B1}$ und $\beta_{A2} = \beta_{B2}$ der Teilstrahlenbündel A bzw. B analog zu obiger Gleichung 1:

$$-\sin(\beta_{A1}) + \frac{\lambda}{d_M} = \sin(\beta_{A2}) \quad \text{(Gl. 7)}$$

$\beta_{A1} :=$     Ablenkwinkel des auf die Messteilung einfallenden Teilstrahlenbündels A gegenüber der Symmetrieebene im in-plane-Betrieb

$\beta_{A2} :=$     Ablenkwinkel des von der Messteilung gebeugten Teilstrahlenbündels A gegenüber der Symmetrieebene im in-plane-Betrieb

$\lambda :=$     Lichtwellenlänge

$d_M :=$     Teilungsperiode der Messteilung für den in-plane-Betrieb

Analog zu obiger Gleichung 2 muss für das vorliegende Ausführungsbeispiel gelten:

$$\beta'_{A1} = \beta'_{B1} = \beta_{A1} = \beta_{B1} \quad \text{(Gl. 8a)}$$

$$\beta'_{A2} = \beta'_{B2} = \beta_{A2} = \beta_{B2} \quad \text{(Gl. 8b)}$$

mit:

$\beta_{A1} :=$     Ablenkwinkel des auf die Messteilung einfallenden Teilstrahlenbündels A gegenüber der Symmetrieebene im in-plane-Betrieb

$\beta_{A2} :=$     Ablenkwinkel des von der Messteilung gebeugten Teilstrahlenbündels A gegenüber der Symmetrieebene im in-plane-Betrieb

$\beta_{B1} :=$     Ablenkwinkel des auf die Messteilung einfallenden Teilstrahlenbündels B gegenüber der Symmetrieebene im in-plane-Betrieb

$\beta_{B2} :=$     Ablenkwinkel des von der Messteilung gebeugten Teilstrahlenbündels B gegenüber der Symmetrieebene im in-plane-Betrieb

$\beta'_{A1} :=$     Ablenkwinkel des auf die Messteilung einfallenden Teilstrahlenbündels A gegenüber der Symmetrieebene im out-of-plane-Betrieb

$\beta'_{A2} :=$     Ablenkwinkel des von der Messteilung gebeugten Teilstrahlenbündels A gegenüber der Symmetrieebene im out-of-plane-Betrieb

$\beta'_{B1} :=$     Ablenkwinkel des auf die Messteilung einfallenden Teilstrahlenbündels B gegenüber der Symmetrieebene im out-of-plane-Betrieb

$\beta'_{B2} :=$     Ablenkwinkel des von der Messteilung gebeugten Teilstrahlenbündels B gegenüber der Symmetrieebene im out-of-plane-Betrieb

Die Beugung an der Messteilung 112' wird durch folgende Gleichungen 9a, 9b beschrieben:

$$-\sin(\beta'_{A1} + \alpha) + n_{A1} \cdot \frac{\lambda}{d'_M} = \sin(\beta'_{A2} + \alpha) \quad \text{(Gl. 9a)}$$

$$-\sin(-\beta'_{B1} + \alpha) + n_{B1} \cdot \frac{\lambda}{d'_M} = \sin(-\beta'_{B2} + \alpha) \quad \text{(Gl. 9b)}$$

mit:

$\beta'_{A1} :=$     Ablenkwinkel des auf die Messteilung einfallenden Teilstrahlenbündels A gegenüber der Symmetrieebene im out-of-plane-Betrieb

$\beta'_{A2} :=$ Ablenkwinkel des von der Messteilung gebeugten Teilstrahlenbündels A gegenüber der Symmetrieebene im out-of-plane-Betrieb

$\beta'_{B1} :=$ Ablenkwinkel des auf die Messteilung einfallenden Teilstrahlenbündels B gegenüber der Symmetrieebene im out-of-plane-Betrieb

$\beta'_{B2} :=$ Ablenkwinkel des von der Messteilung gebeugten Teilstrahlenbündels B gegenüber der Symmetrieebene im out-of-plane-Betrieb

$\alpha :=$ Kippwinkel

$n_{A1} :=$ Beugungsordnung des Teilstrahlenbündels A bei erster Beugung an der Messteilung im out-of-plane-Betrieb

$n_{B1} :=$ Beugungsordnung des Teilstrahlenbündels B bei erster Beugung an der Messteilung im out-of-plane-Betrieb

$\lambda :=$ Lichtwellenlänge

$d'_M :=$ Teilungsperiode der Messteilung im out-of-plane-Betrieb

Die Gleichungen 7a, 7b, 8a, 8b, 9a, 9b lassen sich folgendermaßen zusammenfassen:

$$-\sin(\alpha)\cos(\beta_{A1}) - \sqrt{1 - \sin(\alpha)^2}\sin(\beta_{A1}) + n_{A1}\cdot\frac{\lambda}{d'_M} = (-\sin(\beta_{A1}) + \frac{\lambda}{d_M})\cdot$$

$$\cos(\alpha) + \sqrt{1 - (-\sin(\beta_{A1}) + \frac{\lambda}{d_M})^2}\cdot\sin(\alpha) \quad \text{(Gl. 10a)}$$

$$-\sin(\alpha)\cos(\beta_{A1}) + \sqrt{1 - \sin(\alpha)^2}\sin(\beta_{A1}) + n_{B1}\cdot\frac{\lambda}{d'_M} = -(-\sin(\beta_{A1}) + \frac{\lambda}{d_M})\cdot$$

$$\cos(\alpha) + \sqrt{1 - (-\sin(\beta_{A1}) + \frac{\lambda}{d_M})^2}\cdot\sin(\alpha) \quad \text{(Gl. 10b)}$$

mit:

$\beta_{A1} :=$ Ablenkwinkel des auf die Messteilung einfallenden Teilstrahlenbündels A gegenüber der Symmetrieebene im in-plane-Betrieb

$\alpha :=$ Kippwinkel

$n_{A1} :=$ Beugungsordnung des Teilstrahlenbündels A bei erster Beugung an der Messteilung im out-of-plane-Betrieb

$n_{B1} :=$ Beugungsordnung des Teilstrahlenbündels B bei erster Beugung an der Messteilung im out-of-plane-Betrieb

$\lambda :=$ Lichtwellenlänge

$d'_M :=$ Teilungsperiode der Messteilung im out-of-plane-Betrieb

Die Gleichungen 10a, 10b können nach dem Kippwinkel $\alpha$ und der Teilungsperiode $d_M'$ der Messteilung 112' für den out-of-plane-Betrieb folgendermaßen aufgelöst werden:

$$d'_M = \frac{1}{2}\sqrt{(n_{A1} - n_{B1})^2 \cdot d_M^2 + (n_{A1} + n_{B1})^2 \cdot \frac{\lambda^2}{\cos(\beta_{A1}) + \sqrt{1 - (\sin(\beta_{A1}) - \frac{\lambda}{d_M})^2}}}$$

$$\text{(Gl. 11a)}$$

$$\alpha = \arctan\left(\frac{n_{A1} + n_{B1}}{n_{A1} - n_{B1}} \cdot \frac{\overline{d_M}}{\cos(\beta_{A1}) + \sqrt{1 - (\sin(\beta_{A1}) - \frac{\lambda}{d_M})^2}}\right) \quad \text{(Gl. 11b)}$$

mit:

$\beta_{A1} :=$ Ablenkwinkel des auf die Messteilung einfallenden Teilstrahlenbündels A gegenüber der Symmetrieebene im in-plane-Betrieb

$\alpha :=$ Kippwinkel

$n_{A1} :=$ Beugungsordnung des Teilstrahlenbündels A bei erster Beugung an der Messteilung im out-of-plane-Betrieb

$n_{B1} :=$ Beugungsordnung des Teilstrahlenbündels B bei erster Beugung an der Messteilung im out-of-plane-Betrieb

$\lambda :=$ Lichtwellenlänge

d'$_M$ :=      Teilungsperiode der Messteilung im out-of-plane-Betrieb

Der nach den Gleichungen 11a, 11b bestimmte Kippwinkel $\alpha$ und die Teilungsperiode d$_M$' der Messteilung 112' gewährleisten, dass der Strahlenverlauf der Teilstrahlenbündel A, B auch im out-of-plane-Betrieb symmetrisch ist, wobei wiederum die Symmetrieebene SE relativ zur Abtasteinheit 120 unverändert bleibt. Die Weglängen der beiden Teilstrahlenbündel A, B bleiben gleich lang. Das Vorzeichen des Kippwinkels $\alpha$ kann durch Vertauschen der Werte von n$_{A1}$ und n$_{B1}$ umgedreht werden, der Wert der Teilungsperiode d$_M$' der Messteilung 112' bleibt dabei gleich. So kann eine Abtasteinheit 120 in beiden Kipplagen +$\alpha$ und -$\alpha$ in Verbindung mit der gleichen Maßverkörperung 110' eingesetzt werden. Die Gleichungen 11a und 11b stellen im übrigen eine Verallgemeinerung der Gleichungen 5a und 5b dar und sind im Fall $\beta_{A1}$ = 0 identisch mit diesen.

Auch in diesem Ausführungsbeispiel können für den out-of-plane-Betrieb andere, nicht symmetrische Kombinationen von Beugungsordnungen für die Beugung an der Messteilung 112' verwendet werden.

Der Empfindlichkeitsvektor e ist im out-of-plane-Betrieb wieder um den Winkel $\alpha$ zur Maßverkörperungsoberfläche geneigt und hat dieselbe Länge wie im in-plane-Betrieb. Das bedeutet dass die Signalperiode SP$_x$' für eine Maßverkörperungsverschiebung entlang der x-Richtung und die Signalperiode SP$_y$' für eine Maßverkörperungsverschiebung in z-Richtung wieder durch die Gleichungen 6a und 6b gegeben sind.

In der folgenden Tabelle 2 sind beispielhafte Werte für das zweite Ausführungsbeispiel mit einer Lichtwellenlänge $\lambda$, = 780nm, einem Einfallswinkel $\beta_{A1}$ = $\beta_{B1}$ = 30° und einer Teilungsperiode d$_M$ = 1 $\mu$m der Messteilung im in-plane-Betrieb zusammengefasst.

Tabelle 2

| Betriebsart | n$_{A1}$=n$_{A2}$ | n$_{B1}$=n$_{B2}$ | $\alpha$ | d$_M$' | SP$_X$' | SP$_Z$' | $\beta_{A2}$=$\beta_{B2}$ |
|---|---|---|---|---|---|---|---|
| in-plane | +1 | -1 | 0° | - | (SP= 0.25 $\mu$m) | - | 16.26° |
| out-of-plane | +3 | -1 | 11.573° | 2.0783 $\mu$m | 0.1552 $\mu$m | 1.2462 $\mu$m | 16.26° |
| out-of-plane | +1 | 0 | 22.272° | 0.5743 $\mu$m | 0.2702 $\mu$m | 0.6596 $\mu$m | 16.26° |

Aus den Gleichungen 8a, 8b, 9a und 9b lässt sich auch der Kippwinkel $\alpha$ und die Teilungsperiode d$_M$' im out-of-plane Betrieb aus vorgegebenen Ablenkwinkeln $\beta'_{A1}$ bzw. $\beta'_{A2}$ des auf die Messteilung 112' einfallenden bzw. von der Messteilung 112' gebeugten Teilstrahlenbündels A gegenüber der Symmetrieebene SE ohne Bezug auf Parameter im in-plane-Betrieb ableiten:

$$d'_M = \frac{\lambda}{2} \cdot \frac{\sqrt{n_{A1}^2 + n_{B1}^2 - 2 \cdot n_{A1} \cdot n_{B1} \cdot cos(\beta'_{A1} + \beta'_{A2})}}{cos\left(\frac{\beta'_{A1} - \beta'_{A2}}{2}\right) \cdot (sin(\beta'_{A1} + \beta'_{A2}))} \qquad \text{(Gl. 11c)}$$

$$\alpha = \pm \arccos\left(\frac{(n_{A1} - n_{B1}) \cdot (cos(\beta'_{A1}) + cos(\beta'_{A2}))}{2 \cdot cos\left(\frac{\beta'_{A1} - \beta'_{A2}}{2}\right) \sqrt{n_{A1}^2 + n_{B1}^2 - 2 \cdot n_{A1} \cdot n_{B1} \cdot cos(\beta'_{A1} + \beta'_{A2})}}\right) \qquad \text{(Gl. 11d)}$$

mit

$\beta'_{A1}$ :=      Ablenkwinkel des auf die Messteilung einfallenden Teilstrahlenbündels A gegenüber der Symmetrieebene SE im out-of-plane-Betrieb

$\beta'_{A2}$ :=      Ablenkwinkel des von der Messteilung gebeugten Teilstrahlenbündels A gegenüber der Symmetrieebene SE im out-of-plane-Betrieb

$\alpha$ :=      Kippwinkel

n$_{A1}$ :=      Beugungsordnung des Teilstrahlenbündels A bei erster Beugung an der Messteilung im out-of-plane Betrieb

n$_{B1}$ :=      Beugungsordnung des Teilstrahlenbündels B bei erster Beugung an der Messteilung im out-of-plane Betrieb

$\lambda$ :=      Lichtwellenlänge

d'$_M$ :=      Teilungsperiode der Messteilung im out-of-plane-Betrieb

Drittes Ausführungsbeispiel

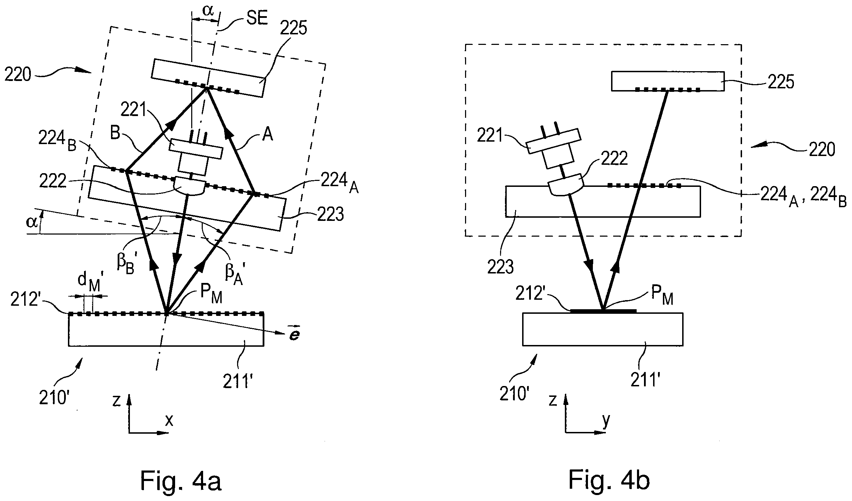

Die Abtastoptik eines dritten Ausführungsbeispiels der erfindungsgemäßen optischen Positionsmesseinrichtung ist in den Figuren 4a, 4b im out-of-plane-Betrieb dargestellt, also wiederum im Betrieb mit geneigtem Empfindlichkeitsvektor e. Figur 4a zeigt den kompletten Strahlverlauf im Abtaststrahlengang in der xz-Ebene, Figur 4b den Strahlverlauf in der yz-Ebene.

Auch hier ist die Abtastoptik bzw. die Abtasteinheit 220 und damit die Symmetrieebene SE um einen Kippwinkel $\alpha$ um eine Drehachse verkippt angeordnet, wobei die Drehachse wie in den vorhergehenden Ausführungsbeispielen orientiert ist. Senkrecht in Bezug auf die Symmetrieebene SE ist wie im ersten Beispiel wiederum die Abtastplatte 223 angeordnet. Als Messteilung 212' ist ein Reflexions-Phasengitter vorgesehen. Der Gittervektor der Messteilung 212' bzw. die erste Teilungsrichtung ist wiederum parallel zur x-Richtung orientiert.

Das von einer Lichtquelle 221, beispielsweise ausgebildet als Laserdiode, emittierte Strahlenbündel wird durch eine Kollimationsoptik 222 kollimiert und auf die Messteilung 212' einer Maßverkörperung 210' gelenkt. Dabei durchtritt das Strahlenbündel unabgelenkt die transparente Abtastplatte 223. Die Messteilung 212' spaltet das einfallende Strahlenbündel in die +3. Beugungsordnung (Teilstrahlenbündel A; $n_{A1}$ = +3) und in die -1. Beugungsordnung (Teilstrahlenbündel B; $n_{B1}$ = -1) bzw. in die Teilstrahlenbündel A bzw. B auf, die V-förmig in Richtung der Abtasteinheit 220 rückreflektiert werden. In der Abtasteinheit 220 durchlaufen die Teilstrahlenbündel A, B dann jeweils ein Abtastgitter $224_A$, $224_B$. Beide Abtastgitter $224_A$, $224_B$ sind im vorliegenden Ausführungsbeispiel auf der Oberseite der Abtastplatte 223 angeordnet, die abgewandt zur Maßverkörperung 210' orientiert ist. An den Abtastgittern $224_A$, $224_B$ erfahren die Teilstrahlenbündel A, B eine Beugung in -1. Ordnung und +1. Ordnung und werden derart in Richtung der Symmetrieachse SE abgelenkt. Die abgelenkten Teilstrahlenbündel A, B propagieren sodann in Richtung eines strukturierten Fotodetektors 225, wo sie überlagert werden und interferieren. Durch die Interferenz entsteht in der Detektionsebene ein Streifenmuster, das durch den strukturierten Fotodetektor 225 erfasst und in mehrere periodische, phasenverschobene Abtastsignale umgewandelt wird.

Der Kippwinkel $\alpha$ und die Teilungsperiode $d_M$' der Messteilung 122' werden auch in diesem Ausführungsbeispiel gemäß den obigen Gleichungen 5a, 5b gewählt. Der Strahlverlauf ist wiederum symmetrisch in Bezug auf die Symmetrieebene SE, die mit der Abtasteinheit 220 um den Kippwinkel $\alpha$ um eine Drehachse in y-Richtung verkippt angeordnet ist. Auch der Empfindlichkeitsvektor e ist um den Kippwinkel $\alpha$ geneigt. Die Gleichungen 6a, 6b liefern auch für dieses Ausführungsbeispiel die Signalperioden $SP_x$, $SP_z$ für eine Maßverkörperungsverschiebung in x- und z-Richtung.

Neben der Nutzung der +3. und -1. Beugungsordnung für die Teilstrahlenbündel A, B könnten alternativ auch die unsymmetrischen Beugungsordnungen +1 und 0 an der Messteilung 212' für die Erzeugung der Teilstrahlenbündel A, B genutzt werden ($n_{A1}$ = +1, $n_{B1}$ = 0) usw..

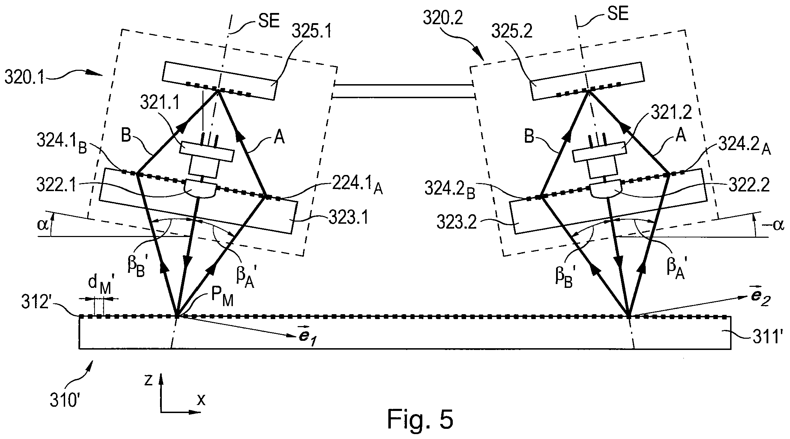

Eine erste Variante der dritten Ausführungsform der erfindungsgemäßen optischen Positionsmesseinrichtung ist in Figur 5 dargestellt. Diese zeigt eine Positionsmesseinrichtung mit zwei Abtasteinheiten 320.1, 320.2 gemäß dem vorstehend erläuterten dritten Ausführungsbeispiel. Beide Abtasteinheiten 320.1, 320.2 sind mechanisch fest miteinander verbunden und dienen zur optischen Abtastung einer einzigen bzw. gemeinsamen Maßverkörperung 310'. Die erste Abtasteinheit 320.1 ist um den Kippwinkel $+\alpha$ verkippt um eine erste Drehachse in y-Richtung angeordnet; die zweite Abtasteinheit 320.2 hingegen ist um den Kippwinkel $-\alpha$ um eine ebenfalls in y-Richtung orientierte, zweite Drehachse verkippt angeordnet, welche parallel zur ersten Drehachse orientiert ist. Die zugehörigen Empfindlichkeitsvektoren $\vec{e}_1$ bzw. $\vec{e}_2$ sind symmetrisch zum in x-Richtung verlaufenden Gittervektor der Messteilung 312' geneigt. Der Aufbau und Abtaststrahlengang entspricht in beiden Abtasteinheiten 320.1, 320.2 jeweils dem des vorher erläuterten dritten Ausführungsbeispiels.

Die Abtasteinheiten 320.1, 320.2 liefern in dieser Variante ausgangsseitig Positionsphasen $\Phi_1$ bzw. $\Phi_2$, die sich gemäß der nachfolgenden Gleichungen 12a, 12b ergeben:

$$\phi_1 = \frac{2\pi}{SP'_X} \cdot \Delta x_M - \frac{2\pi}{SP'_Z} \cdot \Delta z_M \qquad \text{(Gl. 12a)}$$

$$\phi_2 = \frac{2\pi}{SP'_X} \cdot \Delta x_M + \frac{2\pi}{SP'_Z} \cdot \Delta z_M \qquad \text{(Gl. 12b)}$$

mit:

$\Phi_1$ :=      Positionsphase der ersten Abtasteinheit

$\Phi_2$ :=      Positionsphase der zweiten Abtasteinheit

$SP_x'$ := Signalperiode der erzeugten Abtastsignale für eine Maßverkörperungsverschiebung entlang der x-Richtung
$SP_z'$ := Signalperiode der erzeugten Abtastsignale für eine Maßverkörperungsverschiebung in z-Richtung
$\Delta X_M$ := Verschiebung der Maßverkörperung in x-Richtung
$\Delta Z_m$ := Verschiebung der Maßverkörperung in z-Richtung

Durch Addition und Subtraktion der Positionsphasen $\Phi_1$ und. $\Phi_2$ der beiden Abtasteinheiten 320.1, 320.2 können unabhängig die z-Position $\xi_Z$ und die x-Position $\xi_X$ der beiden Abtasteinheiten 320.1, 320.2 relativ zur Maßverkörperung 310' bestimmt werden:

$$\xi_X = \frac{SP_X'}{4\pi} \cdot (\phi_1 + \phi_2) \quad \text{(Gl. 13a)}$$

$$\xi_Z = \frac{SP_Z'}{4\pi} \cdot (\phi_2 - \phi_1) \quad \text{(Gl. 13b)}$$

mit:

$\xi_X$ := x-Position der beiden Abtasteinheiten relativ zur Maßverkörperung
$\xi_Z$ := z-Position der beiden Abtasteinheiten relativ zur Maßverkörperung
$\Phi_1$ := Positionsphase der ersten Abtasteinheit
$\Phi_2$ := Positionsphase der zweiten Abtasteinheit
$SP_x'$ := Signalperiode der erzeugten Abtastsignale für eine Maßverkörperungsverschiebung entlang der x-Richtung
$SP_z'$ := Signalperiode der erzeugten Abtastsignale für eine Maßverkörperungsverschiebung in z-Richtung

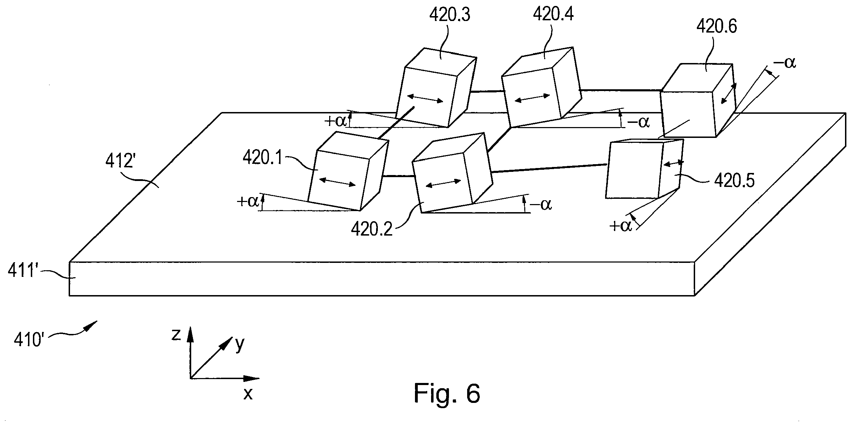

Eine zweite Variante der dritten Ausführungsform der erfindungsgemäßen optischen Positionsmesseinrichtung ist in Figur 6 gezeigt. Diese zeigt eine Messanordnung, die abtastseitig drei Paare von Abtasteinheiten 420.1 - 420.6 gemäß der Variante in Figur 5 umfasst. Mit Hilfe der drei Paare von Abtasteinheiten 420.1 - 420.6 wird eine Messteilung 412' auf der Maßverkörperung 410' abgetastet, welche als zweidimensionales Kreuzgitter ausgebildet ist und damit zwei kollineare Gittervektoren und damit eine erste und zweite Teilungsrichtung aufweist, die in Figur 6 parallel zur x- und y-Richtung orientiert sind. Alle sechs Abtasteinheiten 420.1 - 420.6 sind dabei starr miteinander verbunden.
Die Paare von Abtasteinheiten 420.1/420.2, 420.3/420.4 sowie 420.5/420.6 sind wie in Fig. 5 jeweils gegenläufig um den Verkippwinkel $\alpha$ verkippt angeordnet. Die Abtasteinheiten-Paare 420.1/420.2 und 420.3/420.4 sind jeweils bzgl. Relativbewegungen in x- und z-Richtung sensitiv, das Abtasteinheiten-Paar 420.5/420.6 ist bzgl. Relativbewegungen in y- und z-Richtung sensitiv. Jedes Paar von Abtasteinheiten 420.1/420.2, 420.3/420.4, 420.5/420.6 erlaubt eine Bestimmung der z-Position der Kreuzgitter-Messteilung relativ zu den Abtasteinheiten 420.1 - 420.6. Dabei liegen die effektiven Messorte für die Messung der z-Position jeweils in der Mitte zwischen den Abtasteinheiten jedes Paares. Somit wird die z-Position der Maßverkörperung 410' an drei unterschiedlichen und nicht kollinearen Orten bestimmt. Zusätzlich liefern die ersten beiden Abtasteinheiten-Paare 420.1/420.2 und 420.3/420.4 jeweils eine x-Position der Maßverkörperung 410', deren Messort in y-Richtung verschieden ist und eine Bestimmung der Kippung Rz der Maßverkörperung 410' um die z-Achse erlaubt. Das Abtasteinheit-Paar 420.5/420.6 liefert weiterhin die y-Position der Maßverkörperung 410'. Mit dieser Anordnung von Abtasteinheiten 420.1 - 420.6 ist es damit möglich, die Position der Maßverkörperung 410' in allen sechs Freiheitsgraden x, y, z, Rx, Ry, Rz zu bestimmen. Selbstverständlich kann im Bedarfsfall auch nur eine Teilmenge von Freiheitsgraden mit einer entsprechend geringeren Anzahl von Abtasteinheiten bestimmt werden.
Neben den erläuterten Ausführungsbeispielen gibt es im Rahmen der vorliegenden Erfindung selbstverständlich noch weitere Ausgestaltungsmöglichkeiten.

**Patentansprüche**

1. Optische Positionsmesseinrichtung zur Erfassung der Position von zwei relativ zueinander beweglichen Objekten mit

   - einer Maßverkörperung (10'; 110'; 210'; 310'; 410'), die mit einem der beiden Objekte verbunden ist und eine Messteilung mit einer periodischen Anordnung von Teilungsbereichen entlang mindestens einer ersten Teilungsrichtung (x) umfasst sowie
   - einer Abtasteinheit (20; 120; 220; 320.1, 320.2; 420.1 - 420.6) mit mehreren optischen Elementen, die beweglich relativ zur Maßverkörperung (10'; 110'; 210'; 310'; 410') angeordnet ist, wobei über die Anordnung und Ausbildung der optischen Elemente der Abtasteinheit (20; 120; 220; 320.1, 320.2; 420.1 - 420.6) ein Abtaststrahlengang resultiert, in dem zur Interferenz gelangende Teilstrahlenbündel in Bezug auf eine Symmetrieebene (SE) spiegelsymmetrisch propagieren und entweder V-förmig auf die Maßverkörperung (10'; 110'; 210'; 310'; 410') einfallen und/oder eine V-förmige Rückreflexion von der Maßverkörperung (10'; 110'; 210'; 310'; 410') erfahren und wobei die Symmetrieebene (SE) um einen definierten Kippwinkel ($\alpha$) um eine Drehachse verkippt ist, welche parallel zur Oberfläche der Maßverkörperung (10'; 110'; 210'; 310'; 410') orientiert ist und sich senkrecht zur ersten Teilungsrichtung (x) erstreckt,

**dadurch gekennzeichnet,**
**dass** Teilstrahlenbündel (A, B) zur Interferenz gelangen, die aus nichtsymmetrischen Beugungsordnungen an der Messteilung (12'; 112'; 212'; 312'; 412') resultieren.

2. Optische Positionsmesseinrichtung nach Anspruch 1, **dadurch gekennzeichnet, dass** die Teilungsperiode ($d_M$) der Messteilung (12'; 112'; 212'; 312'; 412') und der Kippwinkel ($\alpha$) derart gewählt sind, dass der Abtaststrahlengang in der Abtasteinheit (20; 120; 220; 320.1, 320.2; 420.1 - 420.6) identisch zum Abtaststrahlengang im unverkippten Zustand ist, in dem die Symmetrieebene (SE) senkrecht zur Oberfläche der Maßverkörperung (10'; 110'; 210'; 310'; 410') orientiert ist.

3. Optische Positionsmesseinrichtung nach Anspruch 1, **dadurch gekennzeichnet, dass** Teilstrahlenbündel (A, B) zur Interferenz gelangen, die aus einer der folgenden Kombinationen von Beugungsordnungen an der Messteilung (12'; 112'; 212'; 312'; 412') resultieren:

   +3. /-1. Beugungsordnung,
   +1. /0. Beugungsordnung
   -3. / + 1. Beugungsordnung,
   -1. / 0. Beugungsordnung

4. Optische Positionsmesseinrichtung nach Anspruch 1, **dadurch gekennzeichnet, dass** die Messteilung (12'; 112'; 212'; 312'; 412') als Reflexions-Phasengitter ausgebildet ist, welches auf eine hohe Beugungseffizienz der zur Signalerzeugung genutzten Beugungsordnungen optimiert ist.

5. Optische Positionsmesseinrichtung nach Anspruch 1, **dadurch gekennzeichnet, dass** die Abtasteinheit (20; 220; 320.1, 320.2; 420.1 - 420.6) mindestens eine Abtastplatte (21; 223; 323.1, 323.2) mit mehreren optischen Elementen umfasst, wobei die Abtastplatte (21; 223; 323.1, 323.2) senkrecht zur Symmetrieebene (SE) angeordnet ist.

6. Optische Positionsmesseinrichtung nach mindestens einem der vorhergehenden Ansprüche, **dadurch gekennzeichnet, dass** eine in der Abtasteinheit (20) angeordnete Abtastplatte (20) transparent ausgebildet ist und auf dessen der Maßverkörperung (10') zugewandten Seite zwei erste und zwei zweite Abtastgitter ($22_{A1}$, $22_{A2}$, $22_{B1}$, $22_{B2}$) angeordnet sind und zwei Reflektoren ($23_A$, $23_B$) auf der hierzu entgegengesetzten Seite der Abtastplatte (21) angeordnet sind, wobei die reflektierenden Seiten der Reflektoren ($23_A$, $23_B$) in Richtung der Maßverkörperung (10') orientiert sind.

7. Optische Positionsmesseinrichtung nach Anspruch 6, **dadurch gekennzeichnet, dass** die Abtasteinheit (20) dergestalt ausgebildet ist, dass ein von einer Lichtquelle emittiertes Strahlenbündel ($S_{IN}$)

   - auf die Messteilung (12') auftrifft, wo eine Aufspaltung in zwei V-förmig zur Abtasteinheit (20) rückreflektierte Teilstrahlenbündel (A, B) erfolgt, die zwei unterschiedlichen Beugungsordnungen entsprechen,
   - die beiden rückreflektierten Teilstrahlenbündel (A, B) in der Abtasteinheit (20) die zwei ersten Abtastgitter ($22_{A1}$, $22_{B1}$) in Richtung der zwei Reflektoren ($23_A$, $23_B$) durchtreten und hierbei eine antiparallel zur Einfallsrichtung orientierte Ablenkwirkung sowie nur eine fokussierende Wirkung senkrecht zur ersten Teilungsrichtung (x) erfahren,
   - die derart abgelenkten und fokussierten Teilstrahlenbündel (A, B) dann jeweils auf den Reflektor ($23_A$, $23_B$) treffen und eine Rückreflexion in Richtung der Maßverkörperung (10') erfahren,
   - die beiden rückreflektierten Teilstrahlenbündel (A, B) dann die zwei zweiten Abtastgitter ($22_{A2}$, $22_{B2}$) in Richtung der Maßverkörperung (10') durchtreten und hierbei eine Ablenkwirkung in der ersten Teilungsrichtung (x) sowie nur eine kollimierende Wirkung senkrecht zur ersten Teilungsrichtung (x) erfahren, so dass die beiden Teilstrahlenbündel (A, B) dann V-förmig in Richtung der Maßverkörperung (10') propagieren,

- wo eine erneute Beugung und Rückreflexion überlagerter Teilstrahlenbündel (A, B) in Richtung der Abtasteinheit (20) resultiert.

8. Optische Positionsmesseinrichtung nach mindestens einem der Ansprüche 1 - 4, **dadurch gekennzeichnet, dass** die Abtasteinheit (120) mindestens ein Aufspaltelement (123), zwei Umlenkelemente ($124_A$, $124_B$), zwei Reflektoren ($126_A$, $126_B$) sowie zwei Linsen ($125_A$, $125_B$) umfasst.

9. Optische Positionsmesseinrichtung nach Anspruch 8, **dadurch gekennzeichnet, dass** Abtasteinheit (125) dergestalt ausgebildet ist, dass ein von einer Lichtquelle (121) emittiertes Strahlenbündel

   - über das Aufspaltelement (123) eine Aufspaltung in zwei Teilstrahlenbündel (A, B) erfährt, die dann jeweils in Richtung der Umlenkelemente ($124_A$, $124_B$) propagieren,
   - die Teilstrahlenbündel (A, B) über die Umlenkelemente ($124_A$, $124_B$) eine Umlenkung erfahren, so dass sie V-förmig in Richtung eines ersten Auftreffortes ($P_M$') auf der Messteilung (112') propagieren,
   - die Teilstrahlenbündel (A, B) am ersten Auftreffort ($P_M$') auf der Messteilung (112') jeweils eine erste Beugung und V-förmige Rückreflexion in Richtung der Linsen ($125_A$, $125_B$) und Reflektoren ($126_A$, $126_B$) in der Abtasteinheit (120) erfahren,
   - die Teilstrahlenbündel (A, B) die Linsen ($125_A$, $125_B$) ein erstes Mal durchlaufen, von den Reflektoren ($126_A$, $126_B$) in die Einfallsrichtung V-förmig zurückreflektiert werden und die Linsen ($125_A$, $125_B$) ein zweites Mal durchlaufen,
   - die Teilstrahlenbündel die Messteilung (112') dann an einem zweiten Auftreffort ($P_M$') beaufschlagen und jeweils eine zweite Beugung und eine V-förmige Rückreflexion in Richtung der Umlenkelemente ($124_A$, $124_B$) in der Abtasteinheit (120) erfahren.

10. Optische Positionsmesseinrichtung nach mindestens einem der Ansprüche 1 - 5, **dadurch gekennzeichnet, dass** die Abtasteinheit (220) mindestens eine transparente Abtastplatte (223) sowie einen strukturierten Fotodetektor (225) umfasst, wobei auf der dem einfallenden Strahlenbündel zugewandten Seite der Abtastplatte (223) erste und zweite Abtastgitter ($224_A$, $224_B$) angeordnet sind.

11. Optische Positionsmesseinrichtung nach Anspruch 10, **dadurch gekennzeichnet, dass** die Abtasteinheit (220) dergestalt ausgebildet ist, dass ein von einer Lichtquelle (221) emittiertes Strahlenbündel

   - die Abtastplatte (223) unbeeinflusst durchläuft und dann auf die Messteilung (212') auftrifft, wo eine Aufspaltung in zwei V-förmig zur Abtasteinheit (220) rückreflektierte Teilstrahlenbündel (A, B) erfolgt, die zwei unterschiedlichen Beugungsordnungen entsprechen,
   - die beiden rückreflektierten Teilstrahlenbündel (A, B) in der Abtasteinheit (220) jeweils eines der beiden Abtastgitter ($224_A$, $224_B$) durchtreten und hierbei eine Ablenkwirkung in Richtung der Symmetrieebene (SE) erfahren und dann in Richtung des strukturierten Fotodetektors (225) propagieren, wo sie interferierend zur Überlagerung kommen.

12. Optische Positonsmesseinrichtung nach Anspruch 10, **dadurch gskennzeichnet,** dass eine zweite, identisch ausgebildete Abtasteinheit (320.2) mit der Abtasteinheit (320.1) mechanisch fest verbunden ist, wobei die beiden Abtasteinheiten (320.1, 320.2) um den gleichen Winkelbetrag aber in entgegengesetzten Richtungen um zugeordnete, parallel zueinander orientierte Drehachsen verkippt angeordnet sind.

13. Messanordnung, **dadurch gekennzeichnet, dass** die Messteilung (412') als zweidimensionales Kreuzgitter ausgebindet ist, das periodische Anordnungen von Teilungsbereichen entlang der ersten und zweiten Teilungsrichtung (x, y) umfasst und drei Paare von Positionsmesseinrichtungen gemäß Anspruch 12 aufweist, wobei zwei Paare parallel zur ersten Teilungsrichtung (x) angeordnet sind und das dritte Paar parallel zur zweiten Teilungsrichtung (y) angeordnet ist.

**Claims**

1. Optical position measuring device for acquiring the position of two objects movable in relation to one another having:

   - a measuring standard (10'; 110'; 210'; 310'; 410'), which is connected to one of the two objects and comprises a measuring division having a periodic arrangement of division regions along at least one first division direction (x) and

- a scanning unit (20; 120; 220; 320.1, 320.2; 420.1 - 420.6) having multiple optical elements, which is arranged movably in relation to the measuring standard (10'; 110'; 210'; 310'; 410'), wherein a scanning beam path results via the arrangement and design of the optical elements of the scanning unit (20; 120; 220; 320.1, 320.2; 420.1 - 420.6), in which partial beams reaching interference propagate mirror-symmetrically with respect to a plane of symmetry (SE) and are either incident in a V-shape on the measuring standard (10'; 110'; 210'; 310'; 410') and/or experience a V-shaped reflection back from the measuring standard (10'; 110'; 210'; 310'; 410') and wherein the plane of symmetry (SE) is tilted by a defined tilt angle ($\alpha$) about a rotational axis, which is oriented parallel to the surface of the measuring standard (10'; 110'; 210'; 310'; 410') and extends perpendicularly to the first division direction (x),

**characterized in that** partial beams (A, B) reach interference, which result from nonsymmetrical orders of diffraction on the measuring division (12'; 112'; 212'; 312'; 412').

2. Optical position measuring device according to Claim 1, **characterized in that** the division period ($d_M$) of the measuring division (12'; 112'; 212'; 312'; 412') and the tilt angle ($\alpha$) are selected such that the scanning beam path in the scanning unit (20; 120; 220; 320.1, 320.2; 420.1 - 420.6) is identical to the scanning beam path in the non-tilted state, in which the plane of symmetry (SE) is oriented perpendicularly to the surface of the measuring standard (10'; 110'; 210'; 310'; 410').

3. Optical position measuring device according to Claim 1, **characterized in that** partial beams (A, B) reach interference, which result from one of the following combinations of orders of diffraction on the measuring division (12'; 112'; 212'; 312'; 412'):

+$3^{rd}$/-$1^{st}$ order of diffraction,
+$1^{st}$/$0^{th}$ order of diffraction
-$3^{rd}$/+$1^{st}$ order of diffraction,
-$1^{st}$/$0^{th}$ order of diffraction.

4. Optical position measuring device according to Claim 1, **characterized in that** the measuring division (12'; 112'; 212'; 312'; 412') is designed as a reflection phase grating, which is optimized for high diffraction efficiency of the orders of diffraction used for signal generation.

5. Optical position measuring device according to Claim 1, **characterized in that** the scanning unit (20; 220; 320.1, 320.2; 420.1 - 420.6) comprises at least one scanning plate (21; 223; 323.1, 323.2) having multiple optical elements, wherein the scanning plate (21; 223; 323.1, 323.2) is arranged perpendicularly to the plane of symmetry (SE).

6. Optical position measuring device according to at least one of the preceding claims, **characterized in that** a scanning plate (20), which is arranged in the scanning unit (20), is formed as transparent and two first and two second scanning gratings ($22_{A1}$, $22_{A2}$, $22_{B1}$, $22_{B2}$) are arranged on the side thereof facing toward the measuring standard (10') and two reflectors ($23_A$, $23_B$) are arranged on the side of the scanning plate (21) opposite thereto, wherein the reflecting sides of the reflectors ($23_A$, $23_B$) are oriented in the direction of the measuring standard (10').

7. Optical position measuring device according to Claim 6, **characterized in that** the scanning unit (20) is designed in such a way that a beam ($S_{IN}$) emitted by a light source

- is incident on the measuring division (12'), where splitting into two partial beams (A, B) reflected back in a V-shape to the scanning unit (20) occurs, the beams corresponding to two different orders of diffraction,
- the two reflected partial beams (A, B) pass through the two first scanning gratings ($22_{A1}$, $22_{B1}$) in the scanning unit (20) in the direction of the two reflectors ($23_A$, $23_B$) and experience in this case a deflection effect oriented antiparallel to the direction of incidence and only a focusing effect perpendicularly to the first division direction (x),
- the partial beams (A, B) deflected and focused in this manner are then each incident on the reflector ($23_A$, $23_B$) and experience a reflection back in the direction of the measuring standard (10'),
- the two reflected partial beams (A, B) then pass through the two second scanning gratings ($22_{A2}$, $22_{B2}$) in the direction of the measuring standard (10') and in this case experience a deflection effect in the first division direction (x) and only a collimating effect perpendicularly to the first division direction (x), so that the two partial beams (A, B) then propagate in a V-shape in the direction of the measuring standard (10'),
- where a renewed diffraction and reflection of superimposed partial beams (A, B) in the direction of the scanning unit (20) results.

8. Optical position measuring device according to at least one of Claims 1 to 4, **characterized in that** the scanning unit (120) comprises at least one splitting element (123), two deflection elements ($124_A$, $124_B$), two reflectors ($126_A$, $126_B$), and two lenses ($125_A$, $125_B$).

9. Optical position measuring device according to Claim 8, **characterized in that** the scanning unit (125) is designed in such a way that a beam emitted by a light source (121)

   - experiences a splitting via the splitting element (123) into two partial beams (A, B), which then each propagate in the direction of the deflection elements ($124_A$, $124_B$),
   - the partial beams (A, B) experience a deflection via the deflection elements ($124_A$, $124_B$), so that they propagate in a V-shape in the direction of a first incidence location ($P_M$') on the measuring division (112'),
   - the partial beams (A, B), at the first incidence location ($P_M$') on the measuring division (112'), each experience a first diffraction and V-shaped reflection back in the direction of the lenses ($125_A$, $125_B$) and reflectors ($126_A$, $126_B$) in the scanning unit (120),
   - the partial beams (A, B) pass through the lenses ($125_A$, $125_B$) a first time, are reflected by the reflectors ($126_A$, $126_B$) back in the direction of incidence in a V-shape, and pass through the lenses ($125_A$, $125_B$) a second time,
   - the partial beams then impinge the measuring division (112') at a second incidence location ($P_M$') and each experience a second diffraction and a V-shaped reflection back in the direction of the deflection elements ($124_A$, $124_B$) in the scanning unit (120).

10. Optical position measuring device according to at least one of Claims 1 to 5, **characterized in that** the scanning unit (220) comprises at least one transparent scanning plate (223) and a structured photodetector (225), wherein first and second scanning gratings ($224_A$, $224_B$) are arranged on the side of the scanning plate (223) facing toward the incident beam.

11. Optical position measuring device according to Claim 10, **characterized in that** the scanning unit (220) is designed in such a way that a beam emitted by light source (221)

   - passes through the scanning plate (223) uninfluenced and is then incident on the measuring division (212'), where splitting into two partial beams (A, B) reflected back in a V-shape to the scanning unit (220) occurs, which correspond to two different orders of diffraction,
   - the two reflected partial beams (A, B) each pass through one of the two scanning gratings ($224_A$, $224_B$) in the scanning unit (220) and experience a deflection effect in the direction of the plane of symmetry (SE) in this case and then propagate in the direction of the structured photodetector (225), where they are superimposed in an interfering manner.

12. Optical position measuring device according to Claim 10, **characterized in that** a second, identically design scanning unit (320.2) is mechanically fixedly connected to the scanning unit (320.1), wherein the two scanning units (320.1, 320.2) are arranged tilted by the same angle absolute value but in opposite directions about assigned rotational axes oriented parallel to one another.

13. Measuring arrangement, **characterized in that** the measuring division (412') is designed as a two-dimensional cross grating, which comprises periodic arrangements of division regions along the first and second division directions (x, y) and three pairs of position measuring devices according to claim 12, wherein two pairs are arranged parallel to the first division direction (x) and the third pair is arranged parallel to the second division direction (y).

**Revendications**

1. Dispositif optique de mesure de position destiné à acquérir la position de deux objets mobiles l'un par rapport à l'autre, comprenant

   - un étalon (10' ; 110' ; 210' ; 310' ; 410') qui est relié à l'un des deux objets et qui est pourvu d'une graduation de mesure avec un arrangement périodique de zones de graduation le long d'au moins une première direction de graduation (x), et
   - une unité de palpage (20 ; 120 ; 220 ; 320.1, 320.2 ; 420.1 - 420.6) pourvue de plusieurs éléments optiques qui sont disposés de manière mobile par rapport à l'étalon (10' ; 110' ; 210' ; 310' ; 410'), un trajet de rayon de palpage résultant de l'arrangement et de la configuration des éléments optiques de l'unité de palpage (20 ; 120 ; 220 ; 320.1, 320.2 ; 420.1 - 420.6), dans lequel des faisceaux de rayons partiels qui produisent des interférences se propagent en symétrie de réflexion par rapport à un plan de symétrie (SE) et sont soit incidents en forme de V sur l'étalon (10' ; 110' ; 210' ; 310' ; 410'), et/soit subissent une rétroréflexion en forme de V depuis l'étalon (10' ; 110' ; 210' ; 310' ; 410') et le plan de symétrie (SE) étant basculé selon un angle de basculement (α) défini autour d'un axe de rotation qui est orienté parallèlement à la surface de l'étalon (10' ; 110' ; 210' ; 310' ; 410') et qui s'étend perpendiculairement à la première direction de graduation (x),

**caractérisé en ce que** les faisceaux de rayons partiels (A, B) produisent des interférences qui résultent des ordres de diffraction non symétriques au niveau de la graduation de mesure (12' ; 112' ; 212' ; 312' ; 412').

2. Dispositif optique de mesure de position selon la revendication 1, **caractérisé en ce que** la période de graduation ($d_M$) de la graduation de mesure (12' ; 112' ; 212' ; 312' ; 412') et l'angle de basculement (α) sont choisis de telle sorte que le trajet de rayon de palpage dans l'unité de palpage (20 ; 120 ; 220 ; 320.1, 320.2 ; 420.1 - 420.6) est identique au trajet de rayon de palpage à l'état non basculé, **en ce que** le plan de symétrie (SE) est orienté perpendiculairement à la surface de l'étalon (10' ; 110' ; 210' ; 310' ; 410').

3. Dispositif optique de mesure de position selon la revendication 1, **caractérisé en ce que** les faisceaux de rayons partiels (A, B) produisent des interférences qui résultent de l'une des combinaisons suivantes des ordres de diffraction au niveau de la graduation de mesure (12' ; 112' ; 212' ; 312' ; 412') :

ordre de diffraction +3/-1,
ordre de diffraction +1/0,
ordre de diffraction -3/+1,
ordre de diffraction -1/0.

4. Dispositif optique de mesure de position selon la revendication 1, **caractérisé en ce que** la graduation de mesure (12' ; 112' ; 212' ; 312' ; 412') est réalisée sous la forme d'un réseau de phase à réflexion qui est optimisé pour une efficacité de diffraction élevée des ordres de diffraction utilisés pour la génération du signal.

5. Dispositif optique de mesure de position selon la revendication 1, **caractérisé en ce que** l'unité de palpage (20 ; 220 ; 320.1, 320.2 ; 420.1 - 420.6) comprend au moins une plaque de palpage (21 ; 223 ; 323.1 , 323.2) pourvue de plusieurs éléments optiques, la plaque de palpage (21 ; 223 ; 323.1 , 323.2) étant disposée perpendiculairement au plan de symétrie (SE).

6. Dispositif optique de mesure de position selon au moins l'une des revendications précédentes, **caractérisé en ce qu'**une plaque de palpage (20) disposée dans l'unité de palpage (20) est de configuration transparente et sur son côté qui fait face à l'étalon (10') sont disposés deux premiers et deux deuxièmes réseaux de phase ($22_{A1}$, $22_{A2}$, $22_{B1}$, $22_{B2}$) et deux réflecteurs ($23_A$, $23_B$) sur le côté de la plaque de palpage (21) à l'opposé de celui-ci, les côtés réfléchissants des réflecteurs ($23_A$, $23_B$) étant orientés en direction de l'étalon (10').

7. Dispositif optique de mesure de position selon la revendication 6, **caractérisé en ce que** l'unité de palpage (20) est configurée de telle sorte qu'un faisceau de rayons ($S_{IN}$) émis par une source de lumière

- vient frapper la graduation de mesure (12'), ce qui donne lieu à une dissociation en deux faisceaux de rayons partiels (A, B) en forme de v rétroréfléchis vers l'unité de palpage (20), lesquels correspondent à deux ordres de diffraction différents,
- les deux faisceaux de rayons partiels (A, B) rétroréfléchis traversent dans l'unité de palpage (20) les deux premiers réseaux de phase ($22_{A1}$, $22_{B1}$) en direction des deux réflecteurs ($23_A$, $23_B$) et subissent ici un effet de déviation orienté en antiparallèle par rapport au sens de l'incidence ainsi que seulement un effet de concentration perpendiculairement à la première direction de graduation (x),
- les faisceaux de rayons partiels (A, B) ainsi déviés et concentrés viennent alors respectivement frapper le réflecteur ($23_A$, $23_B$) et subissent une rétroréflexion en direction de l'étalon (10'),
- les deux faisceaux de rayons partiels (A, B) rétroréfléchis traversent alors les deux deuxièmes réseaux de phase ($22_{A2}$, $22_{B2}$) en direction de l'étalon (10') et subissent ici un effet de déviation dans la première direction de graduation (x) ainsi que seulement un effet de collimation perpendiculairement à la première direction de graduation (x), de sorte que les deux faisceaux de rayons partiels (A, B) se propagent ensuite en forme de V en direction de l'étalon (10'),
- où il en résulte une nouvelle diffraction et une rétroréflexion des faisceaux de rayons partiels (A, B) superposés en direction de l'unité de palpage (20).

8. Dispositif optique de mesure de position selon au moins l'une des revendications 1 à 4, **caractérisé en ce que** l'unité de palpage (120) comprend au moins un élément de dissociation (123), deux éléments de renvoi ($124_A$, $124_B$), deux réflecteurs ($126_A$, $126_B$) ainsi que deux lentilles ($125_A$, $125_B$).

9. Dispositif optique de mesure de position selon la revendication 8, **caractérisé en ce que** l'unité de palpage (125) est configurée de telle sorte qu'un faisceau de rayons émis par une source de lumière (121)

- subit, par le biais de l'unité de dissociation (123), une dissociation en deux faisceaux de rayons partiels (A, B) qui se propagent ensuite respectivement en direction des éléments de renvoi ($124_A$, $124_B$),
- les faisceaux de rayons partiels (A, B) subissent, par le biais des éléments de renvoi ($124_A$, $124_B$), un renvoi de sorte qu'ile se propagent en forme de V en direction d'un premiers point d'incidence ($P_M$') sur la graduation de mesure (112'),
- les faisceaux de rayons partiels (A, B) subissent respectivement, au premier point d'incidence ($P_M$') sur la graduation de mesure (112'), une première diffraction et une rétroréflexion en forme de V en direction des lentilles ($125_A$, $125_B$) et des réflecteurs ($126_A$, $126_B$) dans l'unité de palpage (120),
- les faisceaux de rayons partiels (A, B) traversent une première fois les lentilles ($125_A$, $125_B$), sont réfléchis en arrière par les réflecteurs ($126_A$, $126_B$) en forme de V dans le sens de l'incidence et traversent une deuxième fois les lentilles ($125_A$, $125_B$),
- les faisceaux de rayons partiels chargent alors la graduation de mesure (112') en un deuxième point d'incidence ($P_M$') et subissent respectivement une deuxième diffraction et une rétroréflexion en forme de V en direction des éléments de renvoi ($124_A$, $124_B$) dans l'unité de palpage (120).

10. Dispositif optique de mesure de position selon au moins l'une des revendications 1 à 5, **caractérisé en ce que** l'unité de palpage (220) comprend au moins une plaque de palpage transparente (223) ainsi qu'un photodétecteur (225) structuré, des première et deuxième grilles de palpage ($224_A$, $224_B$) étant disposées sur le côté de la plaque de palpage (223) qui fait face au faisceau de rayons incident.

11. Dispositif optique de mesure de position selon la revendication 10, **caractérisé en ce que** l'unité de palpage (220) est configurée de telle sorte qu'un faisceau de rayons émis par une source de lumière (221)

- traverse la plaque de palpage (223) sans subir d'influence et vient ensuite frapper la graduation de mesure (212'), ce qui donne lieu à une dissociation en deux faisceaux de rayons partiels (A, B) en forme de V rétroréfléchis vers l'unité de palpage (220), lesquels correspondent à deux ordres de diffraction différents,
- les deux faisceaux de rayons partiels (A, B) rétroréfléchis traversent respectivement dans l'unité de palpage (220) l'une des deux grilles de palpage ($224_A$, $224_B$) et subissent ici un effet de déviation en direction du plan de symétrie (SE), puis se propagent en direction du photodétecteur (225) structuré où ils se superposent avec interférence.

12. Dispositif optique de mesure de position selon la revendication 10, **caractérisé en ce qu'**une deuxième unité de palpage (320.2), de configuration identique, est reliée mécaniquement à demeure avec la première unité de palpage (320.1), les deux unités de palpage (320.1, 320.2) étant disposées selon la même valeur angulaire, mais dans des directions opposées basculées autour d'axes de rotation associés, orientés parallèlement l'un à l'autre.

13. Arrangement de mesure, **caractérisé en ce que** la graduation de mesure (412') est réalisée sous la forme d'une grille croisée bidimensionnelle qui comprend des arrangements périodiques de zones de graduation le long des première et deuxième directions de graduation (x, y) et possède trois paires de dispositifs optiques de mesure de position selon la revendication 12, deux paires étant disposées parallèlement à la première direction de graduation (x) et la troisième paire étant disposée parallèlement à la deuxième direction de graduation (y).

Fig. 1a          Fig. 1b          Fig. 1c

EP 3 059 554 B1

Fig. 2a

Fig. 2b

Fig. 2c

Fig. 3a

Fig. 3b

Fig. 4b

Fig. 4a

Fig. 5

Fig. 6

EP 3 059 554 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1762828 A2
- US 20120050748 A1
- US 6166817 A
- EP 14182781 A